(19) Europäisches Patentamt / European Patent Office / Office européen des brevets

(11) **EP 2 645 081 A2**

(12) **EUROPEAN PATENT APPLICATION**

(43) Date of publication:
**02.10.2013 Bulletin 2013/40**

(51) Int Cl.:
**G01N 9/00** (2006.01)

(21) Application number: **13158707.3**

(22) Date of filing: **12.03.2013**

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **27.03.2012 JP 2012072283** | (71) Applicant: **Azbil Corporation**<br>**Chiyoda-ku**<br>**Tokyo 100-6419 (JP)**<br><br>(72) Inventor: **Ooishi, Yasuharu**<br>**Tokyo 100-6419 (JP)**<br><br>(74) Representative: **Klunker . Schmitt-Nilson . Hirsch**<br>**Patentanwälte**<br>**Destouchesstrasse 68**<br>**80796 München (DE)** |

(54) **Density measuring system and density measuring method**

(57) Provided is a density-equation creating system, including: a container, each of a plurality of kinds of mixed gas being injected in the container; a heating element configured to produce heat at a plurality of heating temperatures, the heating element being arranged in the container; a measuring section configured to measure values of electric signals output from the heating element, the heating element producing heat at the plurality of heating temperatures, respectively; and an equation creating section configured to create a density equation including independent variables and a dependent variable based on values of density of the plurality of kinds of mixed gas and based on measured values of electric signals output from the heating element at the plurality of heating temperatures, the independent variables being electric signals output from the heating element at the plurality of heating temperatures, respectively, the dependent variable being the density.

FIG.18

EP 2 645 081 A2

**Description**

Background

The present invention relates to a gas inspection technology. Specifically, the present invention relates to a density measuring system and a density measuring method.

There is known a vibratory gas density meter as means for measuring gas density. A vibratory gas density meter measures gas density by utilizing the fact that a resonance frequency of a cylindrical vibrator changes depending on gas density around the cylindrical vibrator. Because of this, such a vibratory gas density meter has the drawback that the vibratory gas density meter is not capable of measuring gas density accurately when an external force is applied to the vibratory gas density meter and the vibratory gas density meter is shaken. In view of this, for example, Japanese Patent Application Laid-open No. H10-281967 proposes a technology in which an elastic member holds a cylindrical vibrator.

Summary

However, even if an elastic member holds a cylindrical vibrator, when a large external force is applied to the vibratory gas density meter and the vibratory gas density meter is shaken, the vibratory gas density meter still may not measure gas density accurately. In view of this, it is an object of the present invention to provide a density measuring system and a density measuring method capable of measuring gas density easily and accurately.

According to an embodiment of the present invention, there is provided a density-equation creating system, including: (a) a container, each of a plurality of kinds of mixed gas being injected in the container; (b) a heating element configured to produce heat at a plurality of heating temperatures, the heating element being arranged in the container; (c) a measuring section configured to measure values of electric signals output from the heating element, the heating element producing heat at the plurality of heating temperatures, respectively; and (d) an equation creating section configured to create a density equation including independent variables and a dependent variable based on values of density of the plurality of kinds of mixed gas and based on measured values of electric signals output from the heating element at the plurality of heating temperatures, the independent variables being electric signals output from the heating element at the plurality of heating temperatures, respectively, the dependent variable being the density.

Further, according to an embodiment of the present invention, there is provided a density- equation creating method, including: (a) preparing a plurality of kinds of mixed gas; (b) causing a heating element to produce heat at a plurality of heating temperatures, the heating element being exposed to each of the plurality of kinds of mixed gas; (c) measuring values of electric signals output from the heating element at the plurality of heating temperatures, respectively; and (d) creating a density equation including independent variables and a dependent variable based on values of density of the plurality of kinds of mixed gas and based on measured values of electric signals output from the heating element at the plurality of heating temperatures, the independent variables being electric signals output from the heating element at the plurality of heating temperatures, respectively, the dependent variable being the density.

Further, according to an embodiment of the present invention, there is provided a density measuring system, including: (a) a container including a heating element, the heating element being configured to produce heat at a plurality of heating temperatures, a measuring- target mixed gas being injected in the container; (b) a storage device configured to store a density equation including independent variables and a dependent variable, the independent variables being electric signals output from the heating element at the plurality of heating temperatures, respectively, the dependent variable being density; (c) a measuring section configured to measure values of electric signals output from the heating element, the heating element producing heat at the plurality of heating temperatures, respectively, the heating element being exposed to the measuring- target mixed gas; and (d) a density calculating section configured to substitute the measured values of the electric signals output from the heating element in the independent variables of the density equation, respectively, to calculate a measured value of the density of the measuring- target mixed gas.

Further, according to an embodiment of the present invention, there is provided a density measuring method, including: (a) preparing measuring- target mixed gas; (b) causing a heating element to produce heat at a plurality of heating temperatures, the heating element being exposed to the measuring- target mixed gas; (c) measuring values of electric signals output from the heating element at the plurality of heating temperatures, respectively; (d) preparing a density equation including independent variables and a dependent variable, the independent variables being electric signals output from the heating element at the plurality of heating temperatures, respectively, the dependent variable being density; and (e) substituting the measured values of the electric signals output from the heating element in the independent variables of the density equation, respectively, to calculate a density of the measuring- target mixed gas.

According to the present invention, it is possible to provide a density measuring system and a density measuring method capable of measuring gas density easily and accurately.

Brief Description of Drawings

Fig. 1 is a perspective view showing a first microchip according to an embodiment of the present invention;

Fig. 2 is a sectional view of the first microchip according to the embodiment of the present invention, which is taken along the line II-II of Fig. 1;

Fig. 3 is a perspective view showing a second microchip according to the embodiment of the present invention;

Fig. 4 is a sectional view of the second microchip according to the embodiment of the present invention, which is taken along the line IV-IV of Fig. 3;

Fig. 5 is a circuit diagram showing a heating element according to the embodiment of the present invention;

Fig. 6 is a circuit diagram showing a temperature detector according to the embodiment of the present invention;

Fig. 7 is a graph showing relation between thermal conductivity and heat-radiation coefficients according to the embodiment of the present invention;

Fig. 8 is a graph showing relation between heat-radiation coefficients of gas and temperature of the heating element according to the embodiment of the present invention;

Fig. 9 is a first graph showing relation between thermal conductivity and resistance of the heating element according to the embodiment of the present invention;

Fig. 10 is a second graph showing relation between thermal conductivity and resistance of the heating element according to the embodiment of the present invention;

Fig. 11 is a third graph showing relation between thermal conductivity and resistance of the heating element according to the embodiment of the present invention;

Fig. 12 is a fourth graph showing relation between thermal conductivity and resistance of the heating element according to the embodiment of the present invention;

Fig. 13 is a first graph showing relation between thermal conductivity and electric power for driving the heating element according to the embodiment of the present invention;

Fig. 14 is a second graph showing relation between thermal conductivity and electric power for driving the heating element according to the embodiment of the present invention;

Fig. 15 is a first schematic diagram showing a density measuring system according to the embodiment of the present invention;

Fig. 16 is a second schematic diagram showing the density measuring system according to the embodiment of the present invention;

Fig. 17 is a flowchart showing a density-equation and calorific-value-equation creating method according to the embodiment of the present invention;

Fig. 18 is a flowchart showing a density and calorific-value measuring method according to the embodiment of the present invention;

Fig. 19 is a graph showing calculation errors of a calorific value according to Example 1 of the present invention;

Fig. 20 is a graph showing calculation errors of a calorific value according to Comparative Example 1 of the present invention;

Fig. 21 is a graph showing calculated calorific values according to Example 2 and Comparative Example 2 of the present invention;

Fig. 22 is a graph showing errors different from the true value of the calculated calorific value of sample mixed gas according to Example 3 of the present invention;

Fig. 23 is a graph showing errors different from the true value of the calculated calorific value of sample mixed gas according to Comparative Example 3 of the present invention; and

Fig. 24 is a graph showing errors different from the true value of the calculated density of sample mixed gas according to Example 4 of the present invention.

Detailed Description of Embodiments

Hereinafter, embodiments of the present invention will be described with reference to the drawings. In the drawings, the same or similar parts are denoted by the same or similar reference symbols. Note that the drawings are schematic drawings. Specific dimensions and the like are to be determined with reference to the following description. As a matter of course, dimensional relation between one figure and another figure may be different, and a dimensional ratio between one figure and another figure may be different.

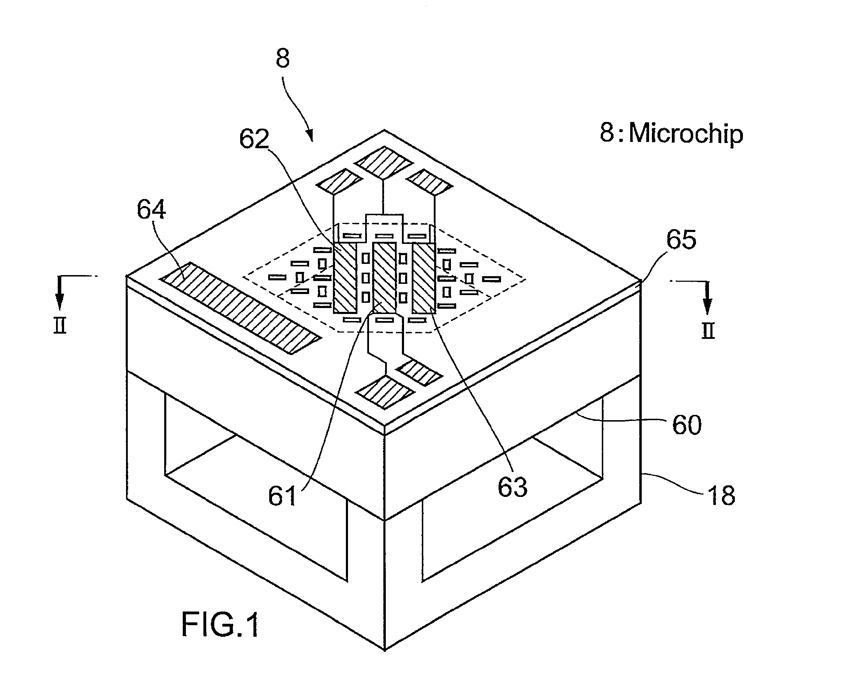

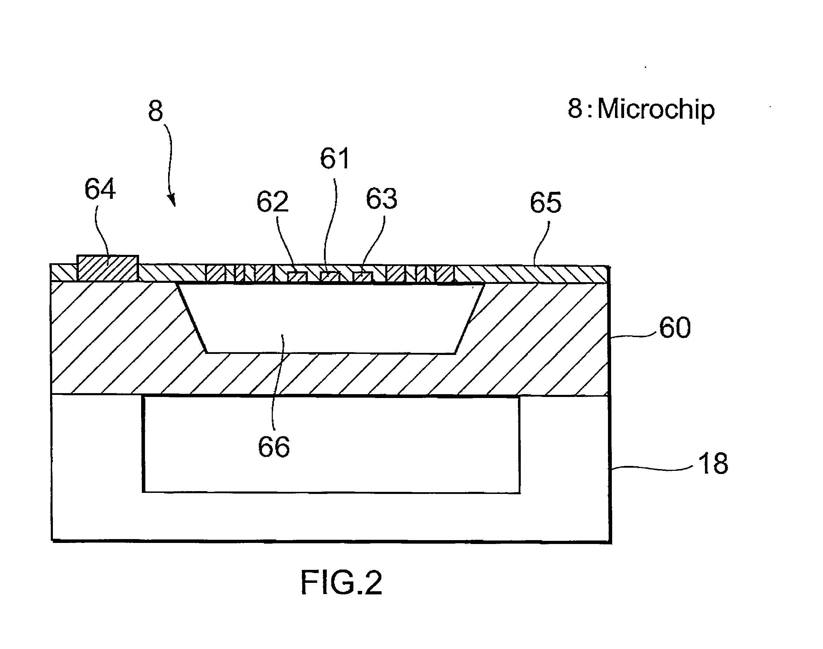

Fig. 1 is a perspective view showing a microchip 8. Fig. 2 is a sectional view of the microchip 8, which is taken along the line II-II. First, with reference to Fig. 1 and Fig. 2, the microchip 8 used in a density measuring system according to an embodiment will be described. The microchip 8 includes a substrate 60 and an insulating film 65. The substrate 60 has a cavity 66. The insulating film 65 is arranged on the substrate 60 such that the insulating film 65 covers the cavity 66. The thickness of the substrate 60 is, for example, 0.5 mm. Further, the length of the substrate 60 is, for example, about 1.5 mm. The width of the substrate 60 is, for example, about 1.5 mm. Part of the insulating film 65, which covers the cavity 66, is a thermal-insulating diaphragm. The microchip 8 further includes a heating element 61, a first temperature detector 62, a second temperature detector 63, and a heat-retention device 64. The heating element 61, the first temperature detector 62, and the second temperature detector 63 are provided in the diaphragm portion of the insulating film 65. The heating element 61 is arranged between the first temperature detector 62 and the second temperature detector 63. The heat-retention device 64 is provided on the substrate 60.

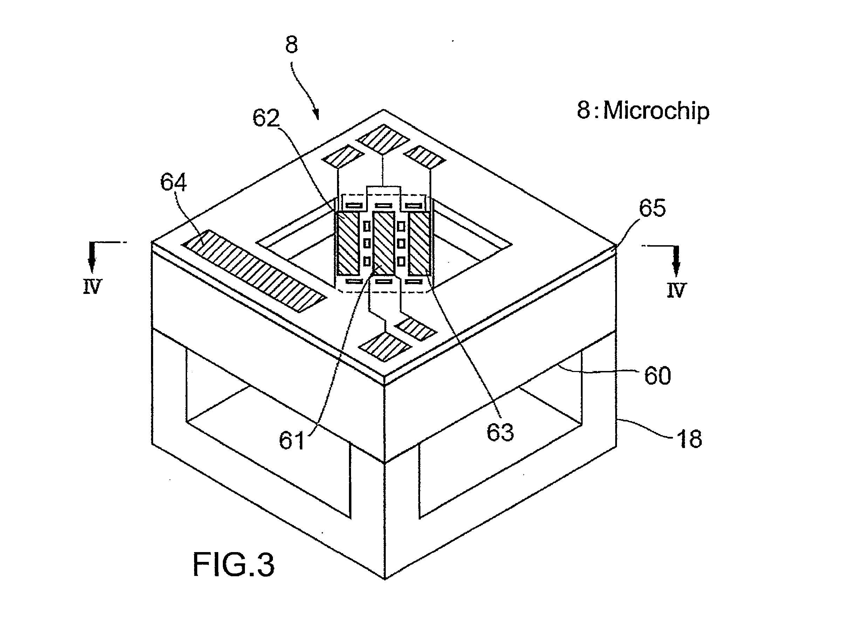

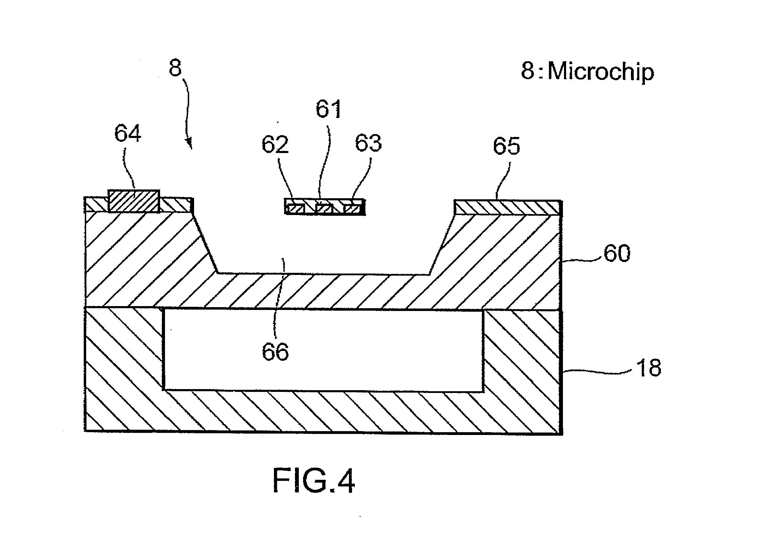

The diaphragm has a plurality of holes. Since the diaphragm has the plurality of holes, gas in the cavity 66 is exchanged rapidly. Alternatively, as shown in Fig. 3 and Fig. 4 (sectional view taken along the line IV-IV of Fig. 3), the insulating film 65 may be arranged on the substrate 60 such that the insulating film 65 covers the cavity 66 in a bridge-like manner. Part of the cavity 66 is thus exposed, and gas in the cavity 66 is exchanged rapidly.

The heating element 61 is arranged at the center of the diaphragm portion of the insulating film 65, which covers the cavity 66. The heating element 61 is, for example, a resistor. The heating element 61 receives electric power, produces heat, and heats the atmosphere gas exposed to the heating element 61. Each of the first temperature detector 62 and the second temperature detector 63 is, for example, an electronic device such as a passive device. An example of the passive device is a resistor. Each of the first temperature detector 62 and the second temperature detector 63 outputs an electric signal depending on the gas temperature of the atmosphere gas. Hereinafter, an example, in which a signal output from the first temperature detector 62 is used, will be described. However, the embodiment is not limited to this. For example, an average value of a signal output from the first temperature detector 62 and a signal output from the second temperature detector 63 may be used as a signal output from the temperature detectors.

The heat-retention device 64 is, for example, a resistor. The heat-retention device 64 receives electric power, produces heat, and keeps the temperature of the substrate 60 constant. The substrate 60 may be made from silicon (Si) or the like. The insulating film 65 may be made from silicon oxide ($SiO_2$) or the like. The cavity 66 is formed by means of anisotropic etching or the like. Further, each of the heating element 61, the first temperature detector 62, the second temperature detector 63, and the heat-retention device 64 may be made from platinum (Pt) or the like, and may be formed by means of lithography or the like. Further, the heating element 61, the first temperature detector 62, and the second temperature detector 63 may be the same components.

A heat-insulating member 18 is arranged on a bottom surface of the microchip 8. The microchip 8 is fixed on a container such as a chamber, which is filled with atmosphere gas, via the heat-insulating member 18. Since the microchip 8 is fixed on the container via the heat-insulating member 18, the temperature of the microchip 8 is unlikely to be affected by temperature fluctuation of an inner wall of the container. The heat-insulating member 18 is made from glass or the like. The thermal conductivity of the heat-insulating member 18 is, for example, 1.0 W/(m·K) or less.

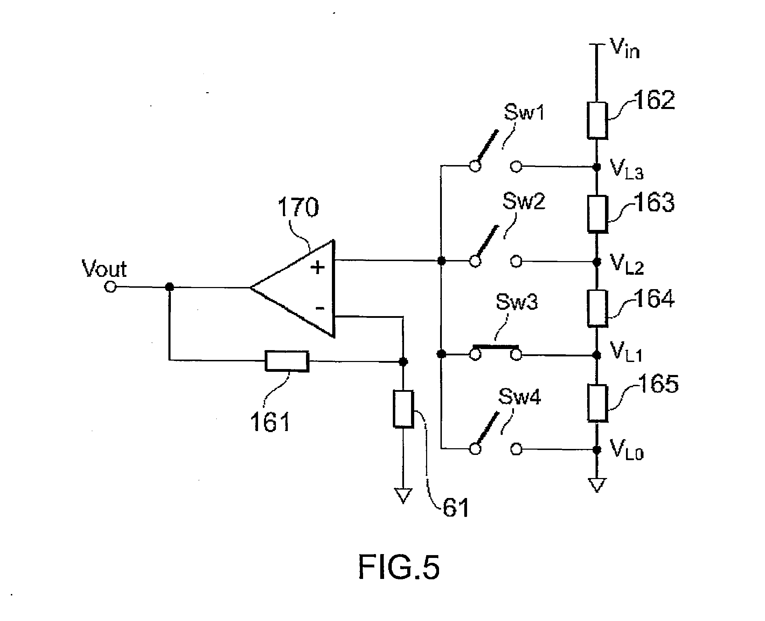

As shown in Fig. 5, for example, a - input terminal of an operational amplifier 170 is electrically connected to one end of the heating element 61. The other end of the heating element 61 is grounded. Further, a resistor 161 is connected in parallel with the - input terminal and an output terminal of the operational amplifier 170. A + input terminal of the operational amplifier 170 is electrically connected between a resistor 162 and a resistor 163, between the resistor 163 and a resistor 164, between the resistor 164 and a resistor 165, or to a grounded terminal of the resistor 165. The resistor 162, the resistor 163, the resistor 164, and the resistor 165 are connected in series. Each of the resistors 162 to 165 has a predetermined resistance value. A voltage $V_{in}$ is applied to one end of the resistor 162, for example. In this case, according to this structure, a first voltage $V_{L1}$ is generated between the resistor 165 and the resistor 164. A second voltage $V_{L2}$ is generated between the resistor 164 and the resistor 163. The second voltage $V_{L2}$ is higher than the first voltage $V_{L1}$. A third voltage $V_{L3}$ is generated between the resistor 163 and the resistor 162. The third voltage $V_{L3}$ is higher than the second voltage $V_{L2}$.

A switch Sw1 is provided between a line connecting the resistor 162 and the resistor 163, and the + input terminal of the operational amplifier. A switch Sw2 is provided between a line connecting the resistor 163 and the resistor 164, and the + input terminal of the operational amplifier. A switch Sw3 is provided between a line connecting the resistor 164 and the resistor 165, and the + input terminal of the operational amplifier. A switch Sw4 is provided between the grounded terminal of the resistor 165 and the + input terminal of the operational amplifier.

In a case where the third voltage $V_{L3}$ is applied to the + input terminal of the operational amplifier 170, a current passes only through the switch Sw1, and the switches Sw2, Sw3, and Sw4 are not connected. In a case where the second voltage $V_{L2}$ is applied to the + input terminal of the operational amplifier 170, a current passes only through the switch Sw2, and the switches Sw1, Sw3, and Sw4 are not connected. In a case where the first voltage $V_{L1}$ is applied to the + input terminal of the operational amplifier 170, a current passes only through the switch Sw3, and the switches Sw1, Sw2, and Sw4 are not connected. In a case where a voltage $V_{L0}$ (0 V) is applied to the + input terminal of the operational amplifier 170, a current passes only through the switch Sw4, and the switches Sw1, Sw2, and Sw3 are not connected. In this manner, it is possible to apply 0 V or one of the three levels of voltages to the + input terminal of the operational amplifier 170, by opening/closing the switches Sw1, Sw2, Sw3, and Sw4. That is, it is possible to set applied voltage, which determines a heating temperature of the heating element 61, at three levels, by opening/closing the switches Sw1, Sw2, Sw3, and Sw4.

Here, $T_{H1}$ is indicative of the temperature of the heating element 61 in a case where the first voltage $V_{L1}$ is applied to the + input terminal of the operational amplifier 170. $T_{H2}$ is indicative of the temperature of the heating element 61 in a case where the second voltage $V_{L2}$ is applied to the + input terminal of the operational amplifier 170. $T_{H3}$ is indicative of the temperature of the heating element 61 in a case where the third voltage $V_{L3}$ is applied to the + input terminal of the operational amplifier 170.

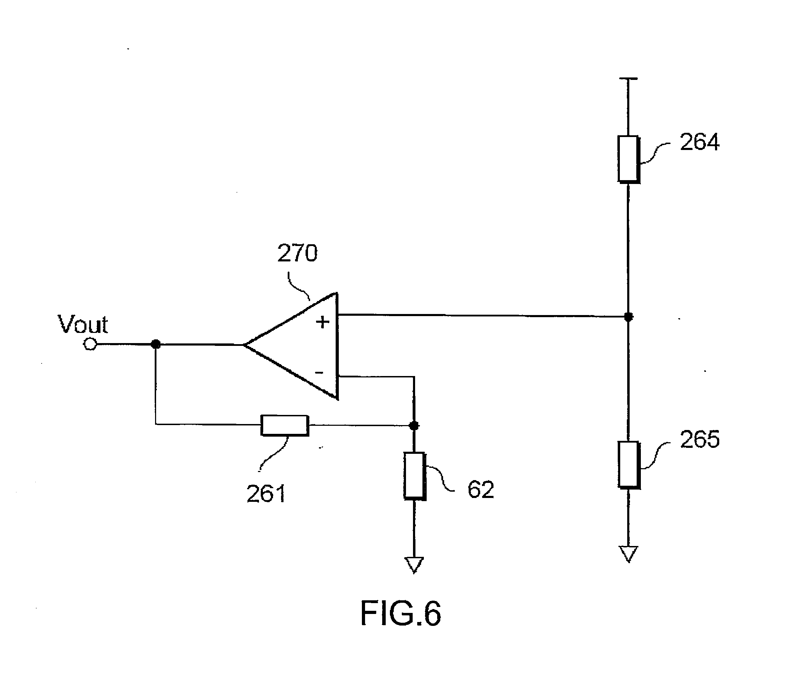

As shown in Fig. 6, for example, a - input terminal of an operational amplifier 270 is electrically connected to one end of the first temperature detector 62. The other end of the first temperature detector 62 is grounded. Further, a resistor 261 is connected in parallel with the - input terminal and an output terminal of the operational amplifier 270. A + input terminal of the operational amplifier 270 is electrically connected to a line connecting a resistor 264 and a resistor 265. The resistor 264 and the resistor 265 are connected in series. According to this structure, a small voltage (about 0.3 V) is applied to the first temperature detector 62.

The resistance value of the heating element 61 of Fig. 1 and Fig. 2 depends on the temperature of the heating element 61. The following Equation (1) shows the relation between the temperature $T_H$ of the heating element 61 and the resistance value $R_H$ of the heating element 61.

$$R_H = R_{H\_STD} \times [\, 1 + \alpha_H (T_H - T_{H\_STD}) + \beta_H (T_H - T_{H\_STD})^2 \,] \quad \ldots (1)$$

Here, $T_{H\_STD}$ is indicative of a standard temperature of the heating element 61, and is, for example, 20°C. $R_{H\_STD}$ is indicative of a previously- measured resistance value of the heating element 61 at the standard temperature $T_{H\_STD}$. $\alpha_H$ is indicative of a primary resistance temperature coefficient. $\beta_H$ is indicative of a secondary resistance temperature coefficient.

As shown in the following Equation (2), the resistance value $R_H$ of the heating element 61 is obtained based on the electric power $P_H$ for driving the heating element 61 and based on the current $I_H$ passing through the heating element 61.

$$R_H = P_H / I_H^2 \quad \ldots (2)$$

Alternatively, as shown in the following Equation (3), the resistance value $R_H$ of the heating element 61 is obtained based on the voltage $V_H$ applied to the heating element 61 and based on the current $I_H$ passing through the heating element 61.

$$R_H = V_H / I_H \quad \ldots (3)$$

Here, the temperature $T_H$ of the heating element 61 is stable when the heating element 61 and the atmosphere gas are thermally balanced. Note that the thermally balanced status means a status in which heat produced by the heating element 61 and heat radiated from the heating element 61 to the atmosphere gas are balanced. As shown in the Equation (4), the electric power $P_H$ for driving the heating element 61 under the balanced status is divided by $\Delta T_H$. $\Delta T_H$ is a difference between the temperature $T_H$ of the heating element 61 and the temperature $T_I$ of the atmosphere gas. As a result, the heat- radiation coefficient $M_I$ (e.g., W/ °C) of the atmosphere gas is obtained.

$$M_I = P_H / (T_H - T_I)$$
$$= P_H / \Delta T_H = (V_H^2 / R_H) / \Delta T_H \quad \ldots (4)$$

Based on Equation (1), Equation (5) shows the temperature $T_H$ of the heating element 61.

$$T_H = (1 / 2\beta_H) \times [\, -\alpha_H + [\alpha_H^2 - 4\beta_H (1 - R_H / R_{H\_STD})]^{1/2} \,] + T_{H\_STD} \quad \ldots (5)$$

In view of this, the following Equation (6) shows the difference $\Delta T_H$ between the temperature $T_H$ of the heating element 61 and the temperature $T_I$ of the atmosphere gas.

$$\Delta T_H = (1/2\beta_H) \times [-\alpha_H + [\alpha_H^2 - 4\beta_H(1-R_H/R_{H\_STD})]^{1/2}] + T_{H\_STD} - T_I \quad \ldots (6)$$

The temperature $T_I$ of the atmosphere gas is approximate to the temperature $T_I$ of the first temperature detector 62. Electric power is supplied to the first temperature detector 62 such that the first temperature detector 62 does not produce heat by itself. The following Equation (7) shows the relation between the temperature $T_I$ of the first temperature detector 62 and the resistance value $R_I$ of the first temperature detector 62.

$$R_I = R_{I\_STD} \times [1 + \alpha_I(T_I - T_{I\_STD}) + \beta_I(T_I - T_{I\_STD})^2] \quad \ldots (7)$$

$T_{I\_STD}$ is indicative of a standard temperature of the first temperature detector 62 and is, for example, 20°C. $R_{I\_STD}$ is indicative of a previously- measured resistance value of the first temperature detector 62 at the standard temperature $T_{I\_STD}$. $\alpha_I$ is indicative of a primary resistance temperature coefficient. $\beta_I$ is indicative of a secondary resistance temperature coefficient. In view of Equation (7), the following Equation (8) shows the temperature $T_I$ of the first temperature detector 62.

$$T_I = (1/2\beta_I) \times [-\alpha_I + [\alpha_I^2 - 4\beta_I(1-R_I/R_{I\_STD})]^{1/2}] + T_{I\_STD} \quad \ldots (8)$$

Accordingly, the following Equation (9) shows the heat- radiation coefficient $M_I$ of the atmosphere gas.

$$M_I = P_H/\Delta T_H$$
$$= P_H / [ (1/2\beta_H) [-\alpha_H + [\alpha_H^2 - 4\beta_H(1-R_H/R_{H\_STD})]^{1/2}] + T_{H\_STD} - (1/2\beta_I) [-\alpha_I + [\alpha_I^2 - 4\beta_I(1-R_I/R_{I\_STD})]^{1/2}] - T_{I\_STD}] \quad \ldots (9)$$

It is possible to measure the current $I_H$ passing through the heating element 61 and the electric power $P_H$ for driving the heating element 61 or the voltage $V_H$ applied to the heating element 61. Therefore it is possible to calculate the resistance value $R_H$ of the heating element 61 by using Equation (2) or Equation (3). Similarly, it is possible to calculate the resistance value $R_I$ of the first temperature detector 62. Therefore the microchip 8 is capable of calculating the heat-radiation coefficient $M_I$ of the atmosphere gas by using Equation (9).

Note that the heat-retention device 64 keeps the temperature of the substrate 60 constant. As a result, before the heating element 61 produces heat, the temperature of the atmosphere gas around the microchip 8 is approximate to the constant temperature of the substrate 60. Because of this, fluctuation of the temperature of the atmosphere gas is reduced before the heating element 61 produces heat. The heating element 61 further heats the atmosphere gas, whose temperature fluctuation is once reduced.

As a result, it is possible to calculate the heat-radiation coefficient $M_I$ more accurately.

Here, the atmosphere gas is mixed gas including four gas components, i.e., gas A, gas B, gas C, and gas D. As shown in the following Equation (10), the sum of the volume fraction $V_A$ of the gas A, the volume fraction $V_B$ of the gas B, the volume fraction $V_C$ of the gas C, and the volume fraction $V_D$ of the gas D is 1.

$$V_A + V_B + V_C + V_D = 1 \quad \ldots (10)$$

Further, $K_A$ is indicative of the calorific value of the gas A per unit volume. $K_B$ is indicative of the calorific value of the gas B per unit volume. $K_C$ is indicative of the calorific value of the gas C per unit volume. $K_D$ is indicative of the calorific value of the gas D per unit volume. Q is indicative of the calorific value of the mixed gas per unit volume. In this case, Q equals to the sum of values, which are obtained by multiplying the volume fractions of the gas components by the calorific values of heat produced by the gas components per unit volume, respectively. That is, the following Equation (11) shows the calorific value Q (e.g., MJ/m$^3$) of the mixed gas per unit volume.

$$Q = K_A \times V_A + K_B \times V_B + K_C \times V_C + K_D \times V_D \quad \ldots (11)$$

Further, $C_A$ is indicative of the thermal conductivity of the gas A per unit volume. $C_B$ is indicative of the thermal conductivity of the gas B per unit volume. $C_C$ is indicative of the thermal conductivity of the gas C per unit volume. $C_D$ is indicative of the thermal conductivity of the gas D per unit volume. $C_I$ is indicative of the thermal conductivity of the mixed gas per unit volume. In this case, $C_I$ equals to the sum of values, which are obtained by multiplying the volume fractions of the gas components by the thermal conductivities of the gas components per unit volume, respectively. That is, the following Equation (12) shows the thermal conductivity $C_I$ (e.g., W/ (mK) ) of the mixed gas per unit volume.

$$C_I = C_A \times V_A + C_B \times V_B + C_C \times V_C + C_D \times V_D \quad \ldots (12)$$

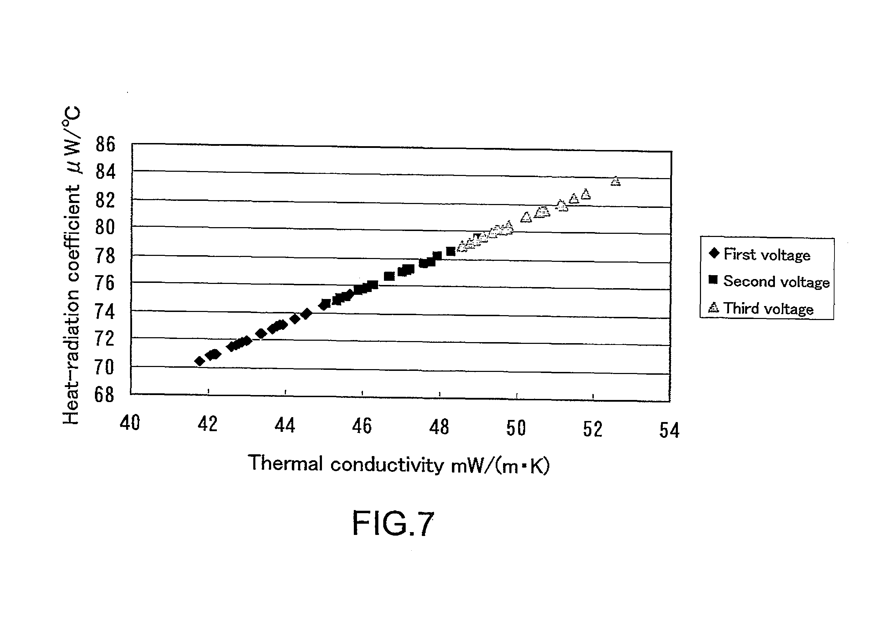

Fig. 7 is a graph showing the relation between the thermal conductivity and the heat-radiation coefficient. Fig. 7 shows that the first voltage $V_1$, the second voltage $V_2$, and the third voltage $V_3$ are applied to the heating element 61. The second voltage $V_2$ is higher than the first voltage $V_1$. The third voltage $V_3$ is higher than the second voltage $V_2$. As shown in Fig. 7, the thermal conductivity is in proportion to the heat-radiation coefficient, in general. $M_A$ is indicative of the heat-radiation coefficient of the gas A. $M_B$ is indicative of the heat-radiation coefficient of the gas B. $M_C$ is indicative of the heat-radiation coefficient of the gas C. $M_D$ is indicative of the heat-radiation coefficient of the gas D. $M_I$ is indicative of the heat-radiation coefficient of the mixed gas. In this case, $M_I$ equals to the sum of values, which are obtained by multiplying the volume fractions of the gas components by the heat-radiation coefficients of the gas components, respectively. That is, the following Equation (13) shows the heat-radiation coefficient $M_I$ of the mixed gas.

$$M_I = M_A \times V_A + M_B \times V_B + M_C \times V_C + M_D \times V_D \quad \ldots (13)$$

Further, the heat- radiation coefficient of gas depends on the temperature $T_H$ of the heating element 61. So the following Equation (14) shows the heat- radiation coefficient $M_I$ of the mixed gas, as a function of the temperature $T_H$ of the heating element 61.

$$M_I(T_H) = M_A(T_H) \times V_A + M_B(T_H) \times V_B + M_C(T_H) \times V_C + M_D(T_H) \times V_D \quad \ldots (14)$$

That is, the following Equation (15) shows the heat-radiation coefficient $M_{I1}$ of the mixed gas ($T_{H1}$) where $T_{H1}$ is indicative of the temperature of the heating element 61. The following Equation (16) shows the heat-radiation coefficient $M_{I2}$ of the mixed gas ($T_{H2}$) where $T_{H2}$ is indicative of the temperature of the heating element 61. The following Equation (17) shows the heat-radiation coefficient $M_{I3}$ of the mixed gas ($T_{H3}$) where $T_{H3}$ is indicative of the temperature of the heating element 61.

$$M_{I1}(T_{H1}) = M_A(T_{H1}) \times V_A + M_B(T_{H1}) \times V_B + M_C(T_{H1}) \times V_C + M_D(T_{H1}) \times V_D \quad \ldots (15)$$

$$M_{I2}(T_{H2}) = M_A(T_{H2}) \times V_A + M_B(T_{H2}) \times V_B + M_C(T_{H2}) \times V_C + M_D(T_{H2}) \times V_D \quad \ldots (16)$$

$$M_{I3}(T_{H3}) = M_A(T_{H3}) \times V_A + M_B(T_{H3}) \times V_B + M_C(T_{H3}) \times V_C + M_D(T_{H3}) \times V_D \quad \ldots (17)$$

Here, the heat- radiation coefficients $M_A(T_H)$, $M_B(T_H)$, $M_C(T_H)$, $M_D(T_H)$ of the respective gas components are non- linear with respect to the temperature $T_H$ of the heating element 61. In this case, each of Equations (15) to (17) has a linear- independent relation. Further, the heat- radiation coefficients $M_A(T_H)$, $M_B(T_H)$, $M_C(T_H)$, $M_D(T_H)$ of the respective gas components are linear with respect to the temperature $T_H$ of the heating element 61. In addition, change rates of the heat- radiation coefficients $M_A(T_H)$, $M_B(T_H)$, $M_C(T_H)$, $M_D(T_H)$ of the respective gas components with respect to the temperature $T_H$ of the heating element 61 are different from each other. Also in this case, each of Equations (15) to (17) has a linear- independent relation. Further, in a case where each of Equations (15) to (17) has a linear- independent relation, each of Equation (10) and Equations (15) to (17) has a linear- independent relation.

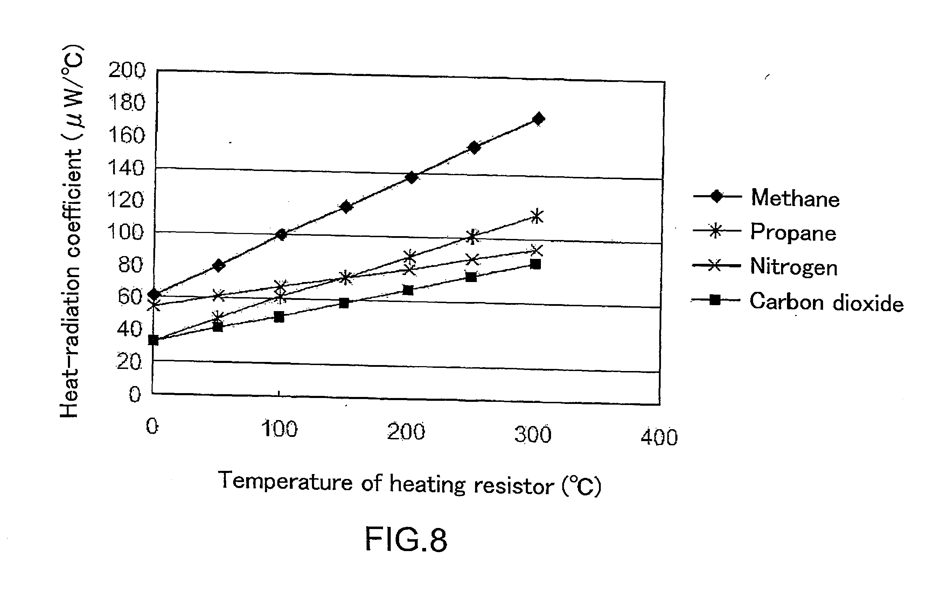

Fig. 8 is a graph showing relation between heat-radiation coefficients of methane ($CH_4$), propane ($C_3H_8$), nitrogen ($N_2$), and carbon dioxide ($CO_2$) and the temperature of the heating element 61. Methane ($CH_4$), propane ($C_3H_8$), nitrogen ($N_2$), and carbon dioxide ($CO_2$) are included in natural gas. The heating element 61 is a heating resistor. The heat-radiation coefficient of each of the gas components (methane ($CH_4$), propane ($C_3H_8$), nitrogen ($N_2$), and carbon dioxide ($CO_2$)) is linear with respect to the temperature of the heating element 61. However, the change rates of the heat-radiation coefficients of methane ($CH_4$), propane ($C_3H_8$), nitrogen ($N_2$), and carbon dioxide ($CO_2$) with respect to

the temperature of the heating element 61 are different from each other. In view of this, in the case where the mixed gas includes methane ($CH_4$), propane ($C_3H_8$), nitrogen ($N_2$), and carbon dioxide ($CO_2$) as gas components, each of Equations (15) to (17) has a linear-independent relation.

The heat-radiation coefficients $M_A(T_{H1})$, $M_B(T_{H1})$, $M_C(T_{H1})$, $M_D(T_{H1})$, $M_A(T_{H2})$, $M_B(T_{H2})$, $M_C(T_{H2})$, $M_D(T_{H2})$, $M_A(T_{H3})$, $M_B(T_{H3})$, $M_C(T_{H3})$, $M_D(T_{H3})$ of the gas components of Equations (15) to (17) may be previously obtained by measuring or the like. In view of this, by solving a simultaneous equation including Equation (10) and Equations (15) to (17), the volume fraction $V_A$ of the gas A, the volume fraction $V_B$ of the gas B, the volume fraction $V_C$ of the gas C, and the volume fraction $V_D$ of the gas D are obtained. As shown in each of the following Equations (18) to (21), each of the volume fraction $V_A$ of the gas A, the volume fraction $V_B$ of the gas B, the volume fraction $V_C$ of the gas C, and the volume fraction $V_D$ of the gas D is obtained as a function of the heat-radiation coefficients $M_{I1}(T_{H1})$, $M_{I2}(T_{H2})$, $M_{I3}(T_{H3})$ of the mixed gas. Note that, in the following Equations (18) to (21), n is indicative of a natural number, and $f_n$ is indicative of a function.

$$V_A = f_1[M_{I1}(T_{H1}), \ M_{I2}(T_{H2}), \ M_{I3}(T_{H3})] \ ...(18)$$

$$V_B = f_2[M_{I1}(T_{H1}), \ M_{I2}(T_{H2}), \ M_{I3}(T_{H3})] \ ...(19)$$

$$V_C = f_3[M_{I1}(T_{H1}), \ M_{I2}(T_{H2}), \ M_{I3}(T_{H3})] \ ...(20)$$

$$V_D = f_4[M_{I1}(T_{H1}), \ M_{I2}(T_{H2}), \ M_{I3}(T_{H3})] \ ...(21)$$

Here, Equations (18) to (21) are substituted in Equation (11). As a result, the following Equation (22) is obtained.

$$\begin{aligned}
Q &= K_A \times V_A + K_B \times V_B + K_C \times V_C + K_D \times V_D \\
&= K_A \times f_1[M_{I1}(T_{H1}), \ M_{I2}(T_{H2}), \ M_{I3}(T_{H3})] \\
&+ K_B \times f_2[M_{I1}(T_{H1}), \ M_{I2}(T_{H2}), \ M_{I3}(T_{H3})] \\
&+ K_C \times f_3[M_{I1}(T_{H1}), \ M_{I2}(T_{H2}), \ M_{I3}(T_{H3})] \\
&+ K_D \times f_4[M_{I1}(T_{H1}), \ M_{I2}(T_{H2}), \ M_{I3}(T_{H3})] \ ...(22)
\end{aligned}$$

As shown in Equation (22), the calorific value Q of the mixed gas per unit volume is obtained based on an equation in which the heat-radiation coefficients $M_{I1}(T_{H1})$, $M_{I2}(T_{H2})$, $M_{I3}(T_{H3})$ of the mixed gas are variables. The heat-radiation coefficients $M_{I1}(T_{H1})$, $M_{I2}(T_{H2})$, $M_{I3}(T_{H3})$ of the mixed gas are values in the case where the temperatures of the heating element 61 are $T_{H1}$, $T_{H2}$, and $T_{H3}$, respectively. In view of this, the following Equation (23) shows the calorific value Q of the mixed gas. $g_1$ is indicative of a function.

$$Q = g_1[M_{I1}(T_{H1}), \ M_{I2}(T_{H2}), \ M_{I3}(T_{H3})] \ ...(23)$$

Further, thermal properties of gas such as a calorific value, a heat-radiation coefficient, and thermal conductivity depend on gas pressure. In view of this, as shown in the following Equation (24), the pressure Ps of the measuring-target mixed gas is included in the Equation (23) of the calorific value Q, as an independent variable. As a result, accuracy of calculation of the calorific value Q is increased.

$$Q = g_1[M_{I1}(T_{H1}), \ M_{I2}(T_{H2}), \ M_{I3}(T_{H3}), \ Ps] \ ...(24)$$

In view of this, the inventors have found out the following fact. That is, it is possible to easily calculate the calorific value Q produced by measuring-target mixed gas, per unit volume, by previously obtaining Equation (24) about the mixed gas including the gas A, the gas B, the gas C, and the gas D, even if the volume fraction $V_A$ of the gas A, the volume fraction $V_B$ of the gas B, the volume fraction $V_C$ of the gas C, and the volume fraction $V_D$ of the gas D are unknown. Specifically, pressure of the measuring-target mixed gas is measured. Further, the heat-radiation coefficients $M_{I1}(T_{H1})$, $M_{I2}(T_{H2})$, $M_{I3}(T_{H3})$ of the measuring-target mixed gas in the case where the heating temperatures of the heating element 61 are $T_{H1}$, $T_{H2}$, and $T_{H3}$, respectively, are measured based on Equation (9). The measured pressure and the measured $M_{I1}(T_{H1})$, $M_{I2}(T_{H2})$, $M_{I3}(T_{H3})$ are substituted in Equation (24). As a result, it is possible to uniquely obtain the calorific value Q produced by the measuring-target mixed gas.

According to the above-mentioned method, the heat-radiation coefficients $M_{I1}(T_{H1})$, $M_{I2}(T_{H2})$, $M_{I3}(T_{H3})$ of the measuring-target mixed gas are measured by using the heating element 61 and the first temperature detector 62 of the microchip 8. Further, pressure of the measuring-target mixed gas is measured by using a pressure sensor. As a result, the calorific value Q is obtained. Meanwhile, according to the following method, it is possible to obtain the calorific value Q produced by the mixed gas only by using the heating element 61 and a pressure sensor, without using the first temperature detector 62 of the microchip 8, even if the temperature of the mixed gas fluctuates.

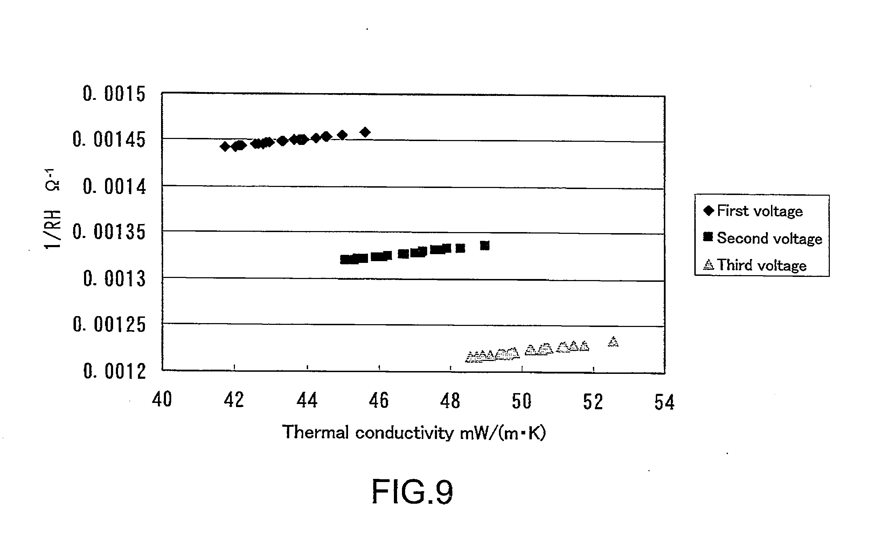

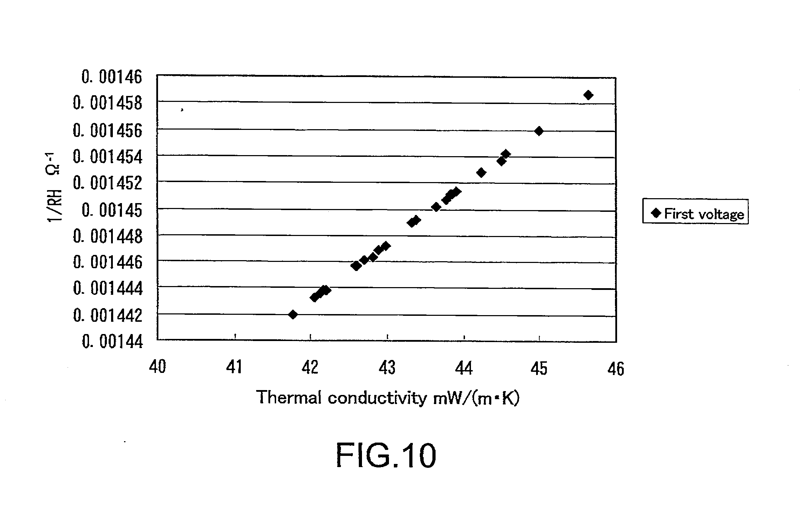

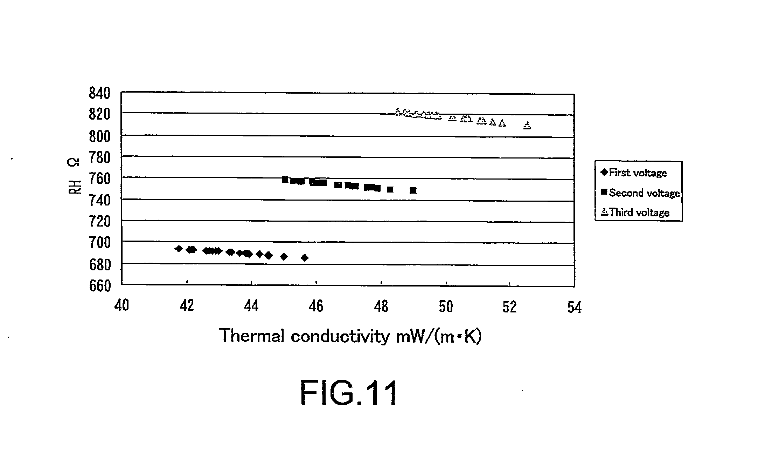

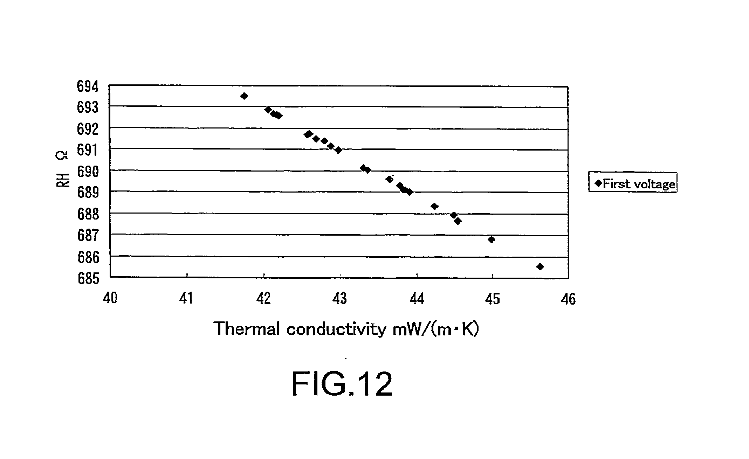

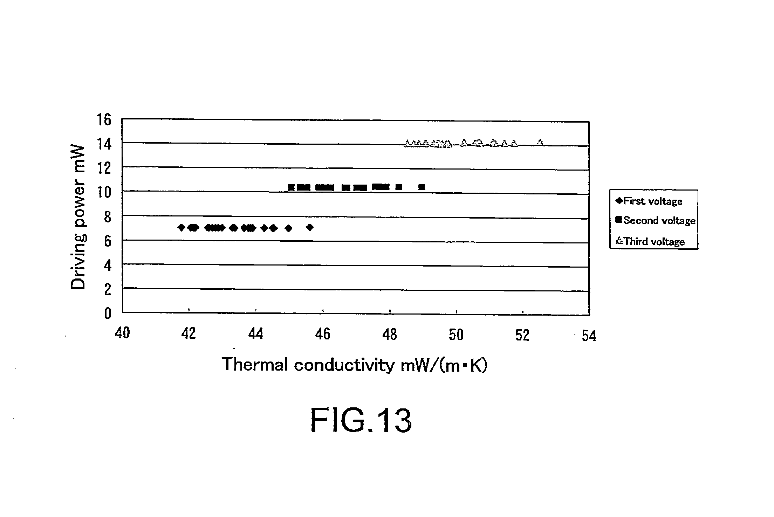

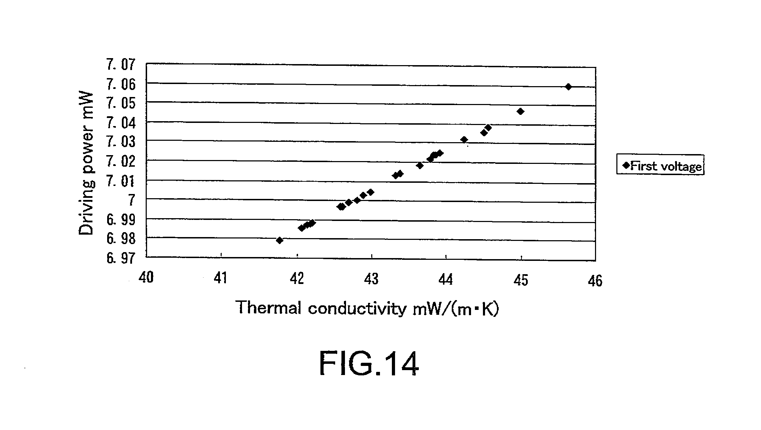

As shown in Equation (4), the heat-radiation coefficient $M_I$ of gas is in proportion to $1/R_H$. $1/R_H$ is the inverse number of the resistance value $R_H$ of the heating element 61. Further, as described above, the heat-radiation coefficient is in proportion to the thermal conductivity. As a result, the inverse number ($1/R_H$) of the resistance value $R_H$ of the heating element 61 is in proportion to the thermal conductivity. Fig. 9 is a graph showing relation between the thermal conductivity and the inverse number ($1/R_H$) of the resistance value $R_H$ of the heating element 61. In Fig. 9, the first voltage $V_1$, the second voltage $V_2$, and the third voltage $V_3$ are applied to the heating element 61. As shown in Fig. 9 and Fig. 10, the thermal conductivity is in proportion to the inverse number ($1/R_H$) of the resistance value $R_H$ of the heating element 61, if the voltage applied to the heating element 61 is constant. Further, as shown in Fig. 11 and Fig. 12, the thermal conductivity is in correlation with the resistance value $R_H$ of the heating element 61 if the voltage applied to the heating element 61 is constant. Further, as shown in Fig. 13 and Fig. 14, the thermal conductivity is in correlation with the electric power for driving the heating element 61, if the voltage applied to the heating element 61 is constant.

In view of this, $1/R_{HA}$ is indicative of the inverse number of the resistance value $R_H$ of the heating element 61 in a case where the heating element 61 is exposed to the gas A. $1/R_{HB}$ is indicative of the inverse number of the resistance value $R_H$ of the heating element 61 in a case where the heating element 61 is exposed to the gas B. $1/R_{HC}$ is indicative of the inverse number of the resistance value $R_H$ of the heating element 61 in a case where the heating element 61 is exposed to the gas C. $1/R_{HD}$ is indicative of the inverse number of the resistance value $R_H$ of the heating element 61 in a case where the heating element 61 is exposed to the gas D. In this case, the inverse number ($1/R_{HI}$) of the resistance value $R_H$ of the heating element 61 exposed to the mixed gas is obtained by modifying Equation (12). That is, $1/R_{HI}$ equals to the sum of values, which are obtained by multiplying the volume fractions of the gas components by the inverse numbers of the resistance values $R_H$ in a case where the heating element 61 is exposed to the gas components, respectively. As a result, the following Equation (25) shows the inverse number ($1/R_{HI}$) of the resistance value $R_H$ of the heating element 61 exposed to the mixed gas to which a constant voltage is applied.

$$1/R_{HI} = 1/R_{HA} \times V_A + 1/R_{HB} \times V_B + 1/R_{HC} \times V_C + 1/R_{HD} \times V_D \quad \ldots (25)$$

Further, the resistance value $R_H$ of the heating element 61 depends on the temperature $T_H$ of the heating element 61. So the inverse number ($1/R_{HI}$) of the resistance value $R_H$ of the heating element 61 exposed to the mixed gas is obtained based on the following Equation (26) as a function of the temperature $T_H$ of the heating element 61.

$$1/R_{HI}(T_H) = 1/R_{HA}(T_H) \times V_A + 1/R_{HB}(T_H) \times V_B + 1/R_{HC}(T_H) \times V_C + 1/R_{HD}(T_H) \times V_D \quad \ldots (26)$$

In view of this, the following Equation (27) shows the inverse number ($1/R_{HI1}$) of the resistance value $R_H$ of the heating element 61 exposed to the mixed gas in a case where the temperature of the heating element 61 is $T_{H1}$. Further, the following Equation (28) shows the inverse number ($1/R_{HI2}$) of the resistance value $R_H$ of the heating element 61 exposed to the mixed gas in a case where the temperature of the heating element 61 is $T_{H2}$. The following Equation (29) shows the inverse number ($1/R_{HI3}$) of the resistance value $R_H$ of the heating element 61 exposed to the mixed gas in a case where the temperature of the heating element 61 is $T_{H3}$.

$$1/R_{HI1}(T_{H1}) = 1/R_{HA}(T_{H1}) \times V_A + 1/R_{HB}(T_{H1}) \times V_B + 1/R_{HC}(T_{H1}) \times V_C + 1/R_{HD}(T_{H1}) \times V_D \quad \ldots (27)$$

$$1/R_{HI2}(T_{H2})=1/R_{HA}(T_{H2}) \times V_A+1/R_{HB}(T_{H2}) \times V_B+1/R_{HC}(T_{H2}) \times V_C+1/R_{HD}(T_{H2}) \times V_D \ \cdot \cdot \cdot (28)$$

$$1/R_{HI3}(T_{H3})=1/R_{HA}(T_{H3}) \times V_A+1/R_{HB}(T_{H3}) \times V_B+1/R_{HC}(T_{H3}) \times V_C+1/R_{HD}(T_{H3}) \times V_D \ \cdot \cdot \cdot (29)$$

In Equation (27) to Equation (29), the resistance values $R_{HA}(T_{H1})$, $R_{HB}(T_{H1})$, $R_{HC}(T_{H1})$, $R_{HD}(T_{H1})$, $R_{HA}(T_{H2})$, $R_{HB}(T_{H2})$, $R_{HC}(T_{H2})$, $R_{HD}(T_{H2})$, $R_{HA}(T_{H3})$, $R_{HB}(T_{H3})$, $R_{HC}(T_{H3})$, $R_{HD}(T_{H3})$ of the heating element 61 exposed to the respective gas components may be previously obtained by measurement or the like. In this case, the following Equations (30) to (33) are obtained by solving a simultaneous equation including Equation (10) and Equations (27) to (29). Equations (30) to (33) show the volume fraction $V_A$ of the gas A, the volume fraction $V_B$ of the gas B, the volume fraction $V_C$ of the gas C, and the volume fraction $V_D$ of the gas, respectively. Equations (30) to (33) are functions of the resistance values $R_{HI1}(T_{H1})$, $R_{HI2}(T_{H2})$, $R_{HI3}(T_{H3})$ of the heating element 61 exposed to the mixed gas. Note that, in the following Equations (30) to (33), n is a natural number. $f_n$ is indicative of a function.

$$V_A=f_5[1/R_{HI1}(T_{H1}), \ 1/R_{HI2}(T_{H2}), \ 1/R_{HI3}(T_{H3})] \ \ldots (30)$$

$$V_B=f_6[1/R_{HI1}(T_{H1}), \ 1/R_{HI2}(T_{H2}), \ 1/R_{HI3}(T_{H3})] \ \ldots (31)$$

$$V_C=f_7[1/R_{HI1}(T_{H1}), \ 1/R_{HI2}(T_{H2}), \ 1/R_{HI3}(T_{H3})] \ \ldots (32)$$

$$V_D=f_8[1/R_{HI1}(T_{H1}), \ 1/R_{HI2}(T_{H2}), \ 1/R_{HI3}(T_{H3})] \ \ldots (33)$$

Here, Equations (30) to (33) are substituted in Equation (11) . As a result, the following Equation (34) is obtained.

$$\begin{aligned} Q=&K_A \times V_A+K_B \times V_B+K_C \times V_C+K_D \times V_D \\ =&K_A \times f_5[1/R_{HI1}(T_{H1}), \ 1/R_{HI2}(T_{H2}), \ 1/R_{HI3}(T_{H3})] \\ &+K_B \times f_6[1/R_{HI1}(T_{H1}), \ 1/R_{HI2}(T_{H2}), \ 1/R_{HI3}(T_{H3})] \\ &+K_C \times f_7[1/R_{HI1}(T_{H1}), \ 1/R_{HI2}(T_{H2}), \ 1/R_{HI3}(T_{H3})] \\ &+K_D \times f_8[1/R_{HI1}(T_{H1}), \ 1/R_{HI2}(T_{H2}), \ 1/R_{HI3}(T_{H3})] \ \ldots (34) \end{aligned}$$

As shown in Equation (34), the calorific value Q of the mixed gas per unit volume is obtained based on an equation in which the resistance values $R_{HI1}(T_{H1})$, $R_{HI2}(T_{H2})$, $R_{HI3}(T_{H3})$ of the heating element 61 in the case where the temperatures of the heating element 61 are $T_{H1}$, $T_{H2}$, and $T_{H3}$, respectively, are variables. In view of this, the calorific value Q of the mixed gas is obtained based on the following Equation (35). Each of $g_2$ and $g_3$ is indicative of a function.

$$\begin{aligned} Q=&g_2[1/R_{HI1}(T_{H1}), \ 1/R_{HI2}(T_{H2}), \ 1/R_{HI3}(T_{H3})] \\ =&g_3[R_{HI1}(T_{H1}), \ R_{HI2}(T_{H2}), \ R_{HI3}(T_{H3})] \ \ldots (35) \end{aligned}$$

Further, the following Equation (36) includes the pressure Ps of the measuring- target mixed gas as an independent variable. As a result, accuracy of calculation of the calorific value Q is increased.

$$Q=g_3[R_{HI1}(T_{H1}), \ R_{HI2}(T_{H2}), \ R_{HI3}(T_{H3}), \ Ps] \ \ldots (36)$$

In view of this, the inventors have found out the following fact. That is, it is possible to easily calculate the calorific value Q produced by the measuring-target mixed gas, per unit volume, by previously obtaining Equation (36) about the mixed gas including the gas A, the gas B, the gas C, and the gas D, even if the volume fraction $V_A$ of the gas A, the volume fraction $V_B$ of the gas B, the volume fraction $V_C$ of the gas C, and the volume fraction $V_D$ of the gas D are unknown. Specifically, the resistance values $R_{HI1}(T_{H1})$, $R_{HI2}(T_{H2})$, $R_{HI3}(T_{H3})$ of the heating element 61 in the case where the heating temperatures of the heating element 61 are $T_{H1}$, $T_{H2}$, and $T_{H3}$, respectively, are measured. Further, the pressure of the measuring-target mixed gas is measured. The measured $R_{HI1}(T_{H1})$, $R_{HI2}(T_{H2})$, $R_{HI3}(T_{H3})$ and pressure are substituted in Equation (36). As a result, it is possible to uniquely obtain the calorific value Q produced by the measuring-target mixed gas, per unit volume. Further, in this case, it is possible to obtain the calorific value Q produced by the mixed gas, per unit volume, only by using the heating element 61 and the pressure sensor, without using the first temperature detector 62 of the microchip 8.

Further, the resistance R is in correlation with the current I. So the calorific value Q produced by the mixed gas, per unit volume, is obtained based on the following Equation (37) . In Equation (37), $g_4$ is indicative of a function. The currents $I_{H1}(T_{H1})$, $I_{H2}(T_{H2})$, $I_{H3}(T_{H3})$ passing through the heating element 61 in the case where the temperatures of the heating element 61 are $T_{H1}$, $T_{H2}$, and $T_{H3}$, respectively, are variables. Further, the pressure Ps is a variable.

$$Q=g_4[I_{H1}(T_{H1}),\ I_{H2}(T_{H2}),\ I_{H3}(T_{H3}),\ Ps]\ \ldots(37)$$

Further, the resistance R of the heating element 61 is in correlation with the output signal AD output from the analog- digital converter circuit (hereinafter referred to as "A/D converter circuit") connected to the heating element 61. So the calorific value Q produced by the mixed gas, per unit volume, is obtained based on the following Equation (38) . In Equation (38), $g_5$ is indicative of a function. The output signals $AD_{H1}(T_{H1})$, $AD_{H2}(T_{H2})$, $AD_{H3}(T_{H3})$ output from the A/D converter circuit in the case where the temperatures of the heating element 61 are $T_{H1}$, $T_{H2}$, and $T_{H3}$, respectively, are variables. Further, the pressure Ps is a variable.

$$Q=g_5[AD_{H1}(T_{H1}),\ AD_{H2}(T_{H2}),\ AD_{H3}(T_{H3}),\ Ps]\ \ldots(38)$$

As a result, the calorific value Q produced by the mixed gas, per unit volume, is based on the following Equation (39). $g_6$ is indicative of a function. The electric signals $S_{H1}(T_{H1})$, $S_{H2}(T_{H2})$, $S_{H3}(T_{H3})$ output from the heating element 61 in the case where the heating temperatures of the heating element 61 are $T_{H1}$, $T_{H2}$, and $T_{H3}$, respectively, are variables. Further, the pressure Ps is a variable.

$$Q=g_6[S_{H1}(T_{H1}),\ S_{H2}(T_{H2}),\ S_{H3}(T_{H3}),\ Ps]\ \ldots(39)$$

The pressure Ps of the mixed gas is measured by using a pressure sensor. The pressure sensor includes, for example, an electrical-resistance strain gauge. When pressure is applied to the strain gauge, the strain gauge deforms, and electrical resistance is changed. Because of this, voltage output from the pressure sensor, a signal output from an A/D converter circuit connected to the pressure sensor, or the like is in correlation with the pressure Ps of the mixed gas. As a result, the calorific value Q produced by the mixed gas, per unit volume, is further based on the following Equation (40). $g_7$ is indicative of a function. The electric signals $S_{H1}(T_{H1})$, $S_{H2}(T_{H2})$, $S_{H3}(T_{H3})$ output from the heating element 61 are variables. Further, an electric signal $S_P$ output from the pressure sensor is a variable.

$$Q=g_7[S_{H1}(T_{H1}),\ S_{H2}(T_{H2}),\ S_{H3}(T_{H3}),\ S_P]\ \ldots(40)$$

The number of the kinds of gas components in the mixed gas may not be limited to four. For example, in a case where the mixed gas includes n kinds of gas components, first, the following Equation (41) is previously obtained. In Equation (41), the electric signals $S_{H1}(T_{H1})$, $S_{H2}(T_{H2})$, $S_{H3}(T_{H3})$, ..., $S_{Hn-1}(T_{Hn-1})$ output from the heating element 61 at at least n- 1 kinds of heating temperatures $T_{H1}$, $T_{H2}$, $T_{H3}$, ..., $T_{Hn-1}$, respectively, are variables. Further, the electric signal $S_P$ from the pressure sensor is a variable. Then, the electric signals $S_{H1}(T_{H1})$, $S_{H2}(T_{H2})$, $S_{H3}(T_{H3})$, ..., $S_{Hn-1}(T_{Hn-1})$ output from the heating element 61 at the n- 1 kinds of heating temperatures $T_{H1}$, $T_{H2}$, $T_{H3}$, .... $T_{Hn-1}$ are measured, respectively. The heating element 61 is exposed to the measuring- target mixed gas including n kinds of gas components, the volume fractions of the n kinds of gas components being unknown. The value of the electric signal $S_P$ output from the pressure sensor exposed to the measuring- target mixed gas is measured. The measured $S_{H1}(T_{H1})$, $S_{H2}(T_{H2})$, $S_{H3}$

($T_{H3}$), ..., $S_{Hn-1}$ ($T_{Hn-1}$) and $S_P$ are substituted in Equation (41) . As a result, it is possible to uniquely obtain the calorific value Q produced by the measuring- target mixed gas, per unit volume.

$$Q=g\,[S_{H1}\,(T_{H1}),\ \ S_{H2}\,(T_{H2}),\ \ S_{H3}\,(T_{H3}),\ \ \ldots,\ \ S_{Hn-1}\,(T_{Hn-1}),\ \ S_P]\ \ \ldots(41)$$

Note that the mixed gas includes methane ($CH_4$), propane ($C_3H_8$), and in addition alkane ($C_jH_{2j+2}$) other than methane ($CH_4$) and propane ($C_3H_8$) as gas components, where j is a natural number. In this case, even if the alkane ($C_jH_{2j+2}$) other than methane ($CH_4$) and  propane ($C_3H_8$) is considered as a mixture of methane ($CH_4$) and propane ($C_3H_8$), it does not affect calculation of Equation (41). For example, as shown in the following Equations (42) to (45), ethane ($C_2H_6$), butane ($C_4H_{10}$), pentane ($C_5H_{12}$), or hexane ($C_6H_{14}$) may be considered as a mixture of methane ($CH_4$) and propane ($C_3H_8$), the mixture being multiplied by a predetermined coefficient, and Equation (41) may be calculated.

$$C_2H_6=0.5CH_4\ +0.5C_3H_8\ \ldots(42)$$

$$C_4H_{10}=-0.5CH_4\ +1.5C_3H_8\ \ldots(43)$$

$$C_5H_{12}=-1.0CH_4\ +2.0C_3H_8\ \ldots(44)$$

$$C_6H_{14}=-1.5CH_4\ +2.5C_3H_8\ \ldots(45)$$

The mixed gas, which includes n kinds of gas components, includes methane ($CH_4$), propane ($C_3H_8$), and in addition z kinds of alkane ($C_jH_{2j+2}$) other than methane ($CH_4$) and propane ($C_3H_8$) as the gas components, where z is a natural number. In this case, an equation, in which electric signals $S_H$ output from the heating element 61 at at least n-z-1 kinds of heating temperatures are variables and the electric signal $S_P$ output from the pressure sensor is a variable, may thus be obtained.

Note that, as a matter of course, it is possible to use Equation (41) in a case where the kinds of gas components in the mixed gas used for calculation of Equation (41) are the same as the kinds of gas components in the measuring-target mixed gas, whose calorific value Q per unit volume is unknown. As a result, the calorific value Q produced by the measuring-target mixed gas, per unit volume, is calculated. Further, it is also possible to use Equation (41) in a case where the number of kinds of gas components in the measuring-target mixed gas is less than n, and where the number of gas components in the mixed gas used for calculation of Equation (41) is less than n. For example, the mixed gas used for calculation of Equation (41) includes four kinds of gas components, i.e., methane ($CH_4$), propane ($C_3H_8$), nitrogen ($N_2$), and carbon dioxide ($CO_2$). In this case, it is also possible to use Equation (41) in a case where the measuring-target mixed gas does not include nitrogen ($N_2$), but only includes three kinds of gas components, i.e., methane ($CH_4$), propane ($C_3H_8$), and carbon dioxide ($CO_2$). As a result, the calorific value Q produced by the measuring-target mixed gas, per unit volume, is calculated.

Further, the mixed gas used for calculation of Equation (41) includes methane ($CH_4$) and propane ($C_3H_8$) as gas components. In this case, it is possible to use Equation (41) in a case where the measuring- target mixed gas includes alkane ($C_jH_{2j+2}$), which is not  included in the mixed gas used for calculation of Equation (41) . The reason is as follows. That is, as described above, alkane ($C_jH_{2j+2}$) other than methane ($CH_4$) and propane ($C_3H_8$) may be considered as a mixture of methane ($CH_4$) and propane ($C_3H_8$) . It does not affect calculation of the calorific value Q per unit volume by using Equation (41) .

Further, gas density D is in proportion to the calorific value Q of the gas. Equation (41) shows the calorific value Q of the gas. The following Equation (46) thus shows the density D of the mixed gas. h is indicative of a function. The electric signals $S_{H1}$ ($T_{H1}$), $S_{H2}$ ($T_{H2}$), $S_{H3}$ ($T_{H3}$), ..., $S_{Hn-1}$ ($T_{Hn-1}$) output from the heating element 61 are variables. The electric signal $S_P$ output from the pressure sensor is a variable.

$$D=h\,[S_{H1}\,(T_{H1}),\ \ S_{H2}\,(T_{H2}),\ \ S_{H3}\,(T_{H3}),\ \ \ldots,\ \ S_{Hn-1}\,(T_{Hn-1}),\ \ S_P]\ \ \ldots(46)$$

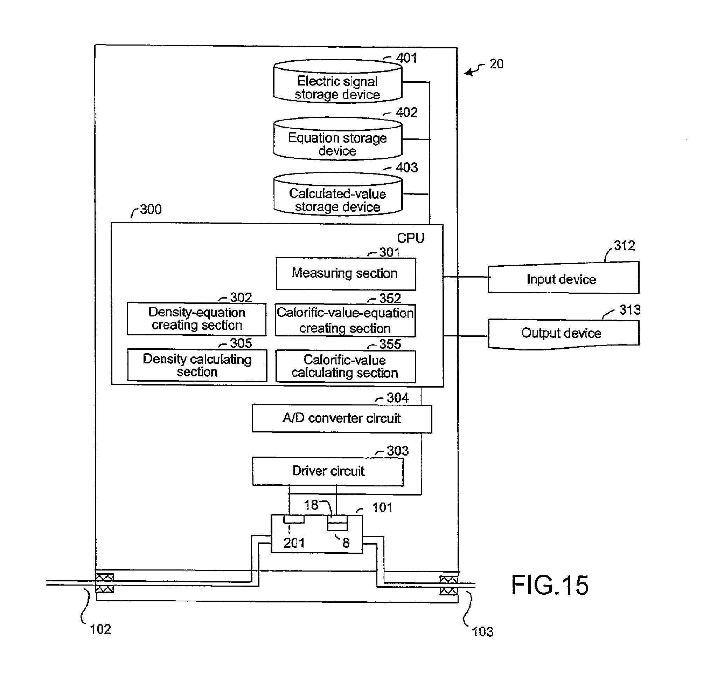

Here, Fig. 15 shows a density measuring system 20 according to the embodiment. The density measuring system 20 includes a chamber 101, the microchip 8 of Fig. 1, and a pressure sensor 201 of Fig. 15. Each of a plurality of kinds of sample mixed gas is injected in the chamber 101 as a container. The microchip 8 is arranged in the chamber 101. The microchip 8 includes the heating element 61. The heating element 61 produces heat at a plurality of heating temperatures $T_H$. Hereinafter, an example in which the density measuring system 20 includes the microchip 8 of Fig. 1 will be described. Alternatively, the density measuring system 20 may include the microchip 8 of Fig. 3. Behaviors (Fig. 15) of the density measuring system 20 including the microchip 8 of Fig. 1 are similar to behaviors of the density measuring system 20 including the microchip 8 of Fig. 3.

The microchip 8 is arranged in the chamber 101 via the heat-insulating member 18. As the pressure sensor 201 for measuring pressure of the gas in the chamber 101, for example, a gauge pressure sensor or an absolute pressure sensor may be used. The pressure sensor 201 includes a pressure-sensitive device. As a pressure-sensitive device, for example, a semiconductor diaphragm device, a capacitance device, an elastic diaphragm device, a piezoelectric device, a vibratory device, or the like may be used. A flow path 102 and a flow path 103 are connected to the chamber 101. The flow path 102 sends the sample mixed gas to the chamber 101. The flow path 103 exhausts the sample mixed gas in the chamber 101 to the outside.

The density measuring system 20 of Fig. 15 further includes a measuring section 301. The measuring section 301 measures values of the electric signals $S_H$ output from the heating element 61. The heating element 61 is exposed to each of the plurality of kinds of sample mixed gas, and produces heat at a plurality of heating temperatures $T_H$. The measuring section 301 further measures the value of the electric signal $S_P$ output from the pressure sensor 201. The density measuring system 20 further includes a density-equation creating section 302 and a calorific-value-equation creating section 352. The density-equation creating section 302 creates a density equation based on the known values of density D of a plurality of kinds of mixed gas, based on the values of the electric signals $S_H$ output from the heating element 61 at a plurality of heating temperatures, and based on the value of the electric signal $S_P$ output from the pressure sensor 201. In the density equation, the electric signals $S_H$ output from the heating element 61 at a plurality of heating temperatures $T_H$, respectively, are independent variables. The electric signal $S_P$ output from the pressure sensor 201 is an independent variable. The gas density D is a dependent variable.

The calorific-value-equation creating section 352 creates a calorific-value equation based on the known calorific value Q of each of a plurality of kinds of mixed gas, based on the values of the electric signals $S_H$ output from the heating element 61 at a plurality of heating temperatures, and based on the electric signal $S_P$ output from the pressure sensor 201. In the calorific-value equation, the electric signals $S_H$ output from the heating element 61 at a plurality of heating temperatures $T_H$, respectively, are independent variables. The electric signal $S_P$ output from the pressure sensor 201 is an independent variable. The calorific value Q of gas is a dependent variable. Note that each sample mixed gas includes a plurality of kinds of gas components.

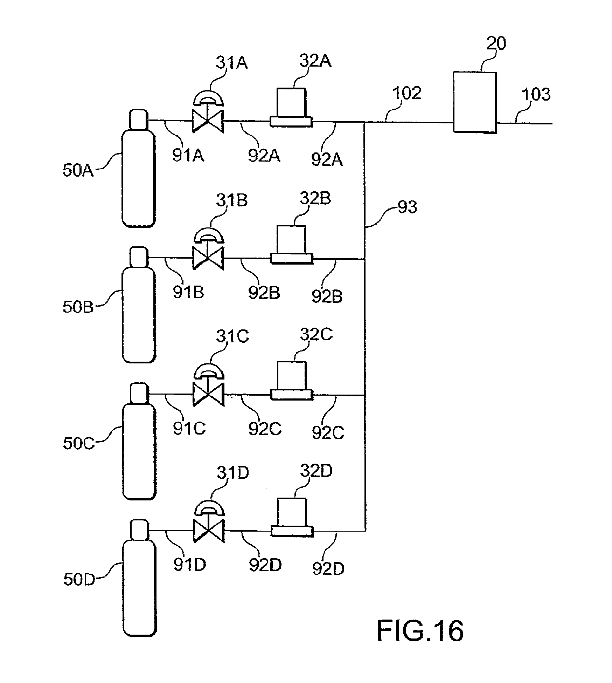

Four kinds of sample mixed gas are used. The density D of one kind of sample mixed gas is different from the density D of any other kind of sample mixed gas. The calorific value Q of one kind of sample mixed gas is different from the calorific value Q of any other kind of sample mixed gas. In this case, as shown in Fig. 16, a first gas cylinder 50A, a second gas cylinder 50B, a third gas cylinder 50C, and a fourth gas cylinder 50D are prepared. The first gas cylinder 50A stores a first sample mixed gas. The second gas cylinder 50B stores a second sample mixed gas. The third gas cylinder 50C stores a third sample mixed gas. The fourth gas cylinder 50D stores a fourth sample mixed gas. A first gas-pressure regulator 31A is connected to the first gas cylinder 50A via a flow path 91A. The first gas-pressure regulator 31A regulates the pressure of the first sample mixed gas. Further, a first flow controller 32A is connected to the first gas-pressure regulator 31A via a flow path 92A. The first flow controller 32A controls a flow rate of the first sample mixed gas, which is sent to the density measuring system 20 via the flow path 92A and the flow path 102.

A second gas-pressure regulator 31B is connected to the second gas cylinder 50B via a flow path 91B. Further, a second flow controller 32B is connected to the second gas-pressure regulator 31B via a flow path 92B. The second flow controller 32B controls a flow rate of the second sample mixed gas, which is sent to the density measuring system 20 via the flow paths 92B, 93, 102.

A third gas-pressure regulator 31C is connected to the third gas cylinder 50C via a flow path 91C. Further, a third flow controller 32C is connected to the third gas-pressure regulator 31C via a flow path 92C. The third flow controller 32C controls a flow rate of the third sample mixed gas, which is sent to the density measuring system 20 via the flow paths 92C, 93, 102.

A fourth gas-pressure regulator 31D is connected to the fourth gas cylinder 50D via a flow path 91D. Further, a fourth flow controller 32D is connected to the fourth gas-pressure regulator 31D via a flow path 92D. The fourth flow controller 32D controls a flow rate of the fourth sample mixed gas, which is sent to the density measuring system 20 via the flow paths 92D, 93, 102.

Each of the first sample mixed gas to the fourth sample mixed gas is, for example, natural gas. The calorific value of particular sample mixed gas is different from the calorific value of any other sample mixed gas. Each of the first sample mixed gas to the fourth sample mixed gas includes four kinds of gas components (for example, methane ($CH_4$), propane ($C_3H_8$), nitrogen ($N_2$), and carbon dioxide ($CO_2$)) of different volume fractions.

The first sample mixed gas is filled in the chamber 101 of Fig. 15. After that, the pressure sensor 201 outputs the electric signal $S_P$. The electric signal $S_P$ depends on the pressure of the first sample mixed gas. A driver circuit 303 of Fig. 15 sequentially supplies drive powers $P_{H1}$, $P_{H2}$, $P_{H3}$ to the heating element 61 of the microchip 8 of Fig. 1 and Fig. 2. In a case where the drive powers $P_{H1}$, $P_{H2}$, $P_{H3}$ are supplied to the heating element 61, the heating element 61 exposed to the first sample mixed gas produces heat at a temperature $T_{H1}$ (100°C), a temperature $T_{H2}$ (150°C), and a temperature $T_{H3}$ (200°C), for example. The heating element 61 outputs an electric signal $S_{H1}(T_{H1})$ at the heating temperature $T_{H1}$, an electric signal $S_{H2}(T_{H2})$ at the heating temperature $T_{H2}$, and an electric signal $S_{H3}(T_{H3})$ at the heating temperature $T_{H3}$.

The first sample mixed gas is removed from the chamber 101. After that, the second sample mixed gas to the fourth sample mixed gas are sequentially filled in the chamber 101. After the second sample mixed gas is filled in the chamber 101, the pressure sensor 201 outputs the electric signal $S_P$. The electric signal $S_P$ depends on the pressure of the second sample mixed gas. The heating element 61 of the microchip 8 of Fig. 1 and Fig. 2 exposed to the second sample mixed gas outputs an electric signal $S_{H1}(T_{H1})$ at the heating temperature $T_{H1}$, an electric signal $S_{H2}(T_{H2})$ at the heating temperature $T_{H2}$, and an electric signal $S_{H3}(T_{H3})$ at the heating temperature $T_{H3}$.

After the third sample mixed gas is filled in the chamber 101 of Fig. 15, the pressure sensor 201 outputs the electric signal $S_P$. The electric signal $S_P$ depends on the pressure of the third sample mixed gas. The heating element 61 of Fig. 1 and Fig. 2 exposed to the third sample mixed gas outputs an electric signal $S_{H1}(T_{H1})$ at the heating temperature $T_{H1}$, an electric signal $S_{H2}(T_{H2})$ at the heating temperature $T_{H2}$, and an electric signal $S_{H3}(T_{H3})$ at the heating temperature $T_{H3}$.

After the fourth sample mixed gas is filled in the chamber 101 of Fig. 15, the pressure sensor 201 outputs the electric signal $S_P$. The electric signal $S_P$ depends on the pressure of the fourth sample mixed gas. The heating element 61 of Fig. 1 and Fig. 2 exposed to the fourth sample mixed gas outputs an electric signal $S_{H1}(T_{H1})$ at the heating temperature $T_{H1}$, an electric signal $S_{H2}(T_{H2})$ at the heating temperature $T_{H2}$, and an electric signal $S_{H3}(T_{H3})$ at the heating temperature $T_{H3}$.

Note that each sample mixed gas includes n kinds of gas components. In this case, the heating element 61 of the microchip 8 of Fig. 1 and Fig. 2 produces heat at at least n-1 kinds of different temperatures. Note that, as described above, alkane ($C_jH_{2j+2}$) other than methane ($CH_4$) and propane ($C_3H_8$) may be considered as a mixture of methane ($CH_4$) and propane ($C_3H_8$). The sample mixed gas, which includes n kinds of gas components, includes methane ($CH_4$), propane ($C_3H_8$), and in addition z kinds of alkane ($C_jH_{2j+2}$) as gas components, where z is a natural number. In this case, the heating element 61 thus produces heat at at least n-z-1 kinds of different temperatures.

As shown in Fig. 15, the microchip 8 and the pressure sensor 201 are connected to a central processing unit (CPU) 300 via an A/D converter circuit 304. The CPU 300 includes the measuring section 301. An electric signal storage device 401 is connected to the CPU 300. The measuring section 301 measures values of the electric signal $S_{H1}(T_{H1})$ at the heating temperature $T_{H1}$, the electric signal $S_{H2}(T_{H2})$ at the heating temperature $T_{H2}$, and the electric signal $S_{H3}(T_{H3})$ at the heating temperature $T_{H3}$, which are output from the heating element 61. The measuring section 301 further measures the value of the electric signal $S_P$ output from the pressure sensor 201. The measuring section 301 stores the measured values in the electric signal storage device 401.

Here, the electric signal $S_H$ output from the heating element 61 is any one of the resistance value $R_H$ of the heating element 61, the current $I_n$ passing through the heating element 61, and an output signal $AD_H$ output from the A/D converter circuit 304 connected to the heating element 61. Further, the electric signal $S_P$ output from the pressure sensor 201 is, for example, any one of a resistance value of a strain gauge in the pressure sensor 201, current passing across the strain gauge, voltage applied to the strain gauge, and a signal output from the A/D converter circuit 304 connected to the strain gauge.

The density-equation creating section 302 of the CPU 300 collects, for example, the known values of density D of the first sample mixed gas to the fourth sample mixed gas, respectively, the plurality of measured values of the electric signals $S_{H1}(T_{H1})$, $S_{H2}(T_{H2})$, $S_{H3}(T_{H3})$ output from the heating element 61, and the plurality of measured values of the electric signal $S_P$ output from the pressure sensor 201. Further, the density-equation creating section 302 calculates a density equation based on the collected values of the density D, the electric signals $S_H$, and the electric signals $S_P$ by means of multivariate statistics. The density equation includes the electric signals $S_{H1}(T_{H1})$, $S_{H2}(T_{H2})$, $S_{H3}(T_{H3})$ output from the heating element 61, as independent variables. The density equation further includes the electric signal $S_P$ output from the pressure sensor 201 as an independent variable. The density equation further includes the gas density D as a dependent variable.

The calorific-value-equation creating section 352 of the CPU 300 collects, for example, the known calorific values Q of the first sample mixed gas to the fourth sample mixed gas, respectively, the plurality of measured values of the electric signals $S_{H1}(T_{H1})$, $S_{H2}(T_{H2})$, $S_{H3}(T_{H3})$ output from the heating element 61, and the plurality of measured values of the electric signal $S_P$ output from the pressure sensor 201. Further, the calorific-value-equation creating section 352 calculates a calorific-value equation based on the collected values of the calorific values Q, the electric signals $S_H$, and the electric signals $S_P$ by means of multivariate statistics. The calorific-value equation includes the electric signals

$S_{H1}(T_{H1})$, $S_{H2}(T_{H2})$, $S_{H3}(T_{H3})$ output from the heating element 61, as independent variables. The calorific-value equation further includes the electric signal $S_P$ output from the pressure sensor 201 as an independent variable. The calorific-value equation further includes the calorific value Q of the gas as a dependent variable.

Note that, examples of "multivariate statistics" include support vector regression and multiple regression analysis disclosed in "A Tutorial on Support Vector Regression" (NeuroCOLT Technical Report (NC- TR- 98- 030), 1998) by A. J Smola and B. Scholkopf and fuzzy quantification theory of second kind disclosed in Japanese Patent Application Laid- open No. H05- 141999.

The density measuring system 20 further includes an equation storage device 402 connected to the CPU 300. The equation storage device 402 stores the density equation created by the density-equation creating section 302, and the calorific-value equation created by the calorific-value-equation creating section 352. Further, an input device 312 and an output device 313 are connected to the CPU 300. Examples of the input device 312 include a keyboard and a pointing device such as a mouse. Examples of the output device 313 include a printer and an image display device such as a liquid crystal display or a monitor.

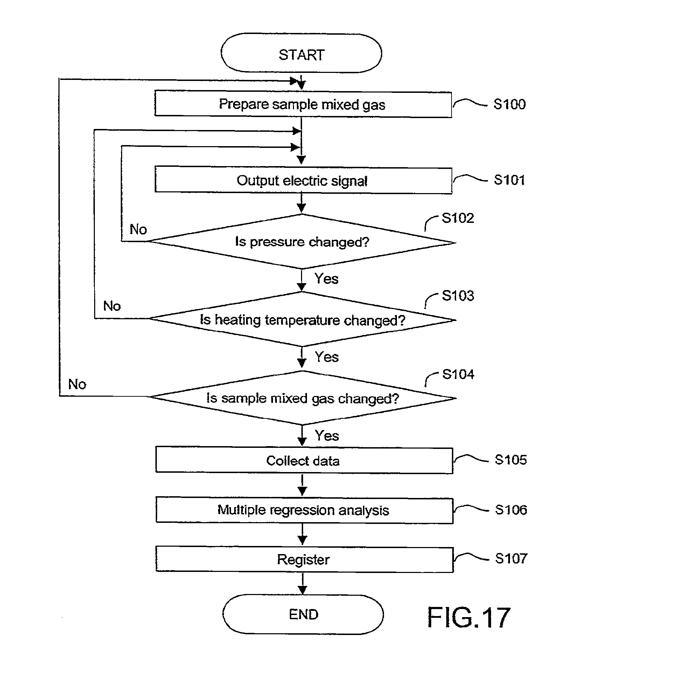

Next, with reference to a flowchart of Fig. 17, a density- equation and calorific- value- equation creating method using the density measuring system 20 of the embodiment will be described. Note that, hereinafter, an example in which the pressure in the chamber 101 is set on the atmospheric pressure, 5 kPa, 20 kPa, and 30 kPa, and the density equation and the calorific- value equation are created will be described.

(a) In Step S100, valves of the second to fourth flow controllers 32B to 32D of Fig. 16 are closed, and a valve of the first flow controller 32A is open. The first sample mixed gas is introduced in the chamber 101 of Fig. 15. In Step S101, the pressure in the chamber 101 is set on the atmospheric pressure. The measuring section 301 measures a value of the electric signal $S_P$ output from the pressure sensor 201. The value of the electric signal $S_P$ indicates the pressure in the pressure sensor 201. The measuring section 301 stores the value of the electric signal $S_P$ in the electric signal storage device 401. Next, the driver circuit 303 supplies drive power $P_{H1}$ to the heating element 61 of Fig. 1 and Fig. 2. As a result, the heating element 61 produces heat at 100°C. The measuring section 301 of Fig. 15 measures a value of an electric signal $S_{H1}(T_{H1})$ output from the heating element 61, which produces heat at 100°C, and stores the value of the electric signal $S_{H1}(T_{H1})$ in the electric signal storage device 401.

(b) In Step S102, the measuring section 301 determines whether the pressure in the chamber 101 is changed. If the pressure in the chamber 101 is not changed to 5 kPa, 20 kPa, and 30 kPa, Step S101 is performed again. The pressure in the chamber 101 is set on 5 kPa. Further, the measuring section 301 stores a value of the electric signal $S_P$ output from the pressure sensor 201 at 5 kPa, and a value of the electric signal $S_{H1}(T_{H1})$ output from the heating element 61, which produces heat at 100°C, in the electric signal storage device 401.

(c) In Step S102, the measuring section 301 determines whether the pressure in the chamber 101 is changed, again. If the pressure in the chamber 101 is not changed to 20 kPa and 30 kPa, Step S101 is performed again. The pressure in the chamber 101 is set on 20 kPa. Further, the measuring section 301 stores a value of the electric signal $S_P$ output from the pressure sensor 201 at 20 kPa, and a value of the electric signal $S_{H1}(T_{H1})$ output from the heating element 61, which produces heat at 100°C, in the electric signal storage device 401.

(d) In Step S102, the measuring section 301 determines whether the pressure in the chamber 101 is changed, again. If the pressure in the chamber 101 is not changed to 30 kPa, Step S101 is performed again. The pressure in the chamber 101 is set on 30 kPa. Further, the measuring section 301 stores a value of the electric signal $S_P$ output from the pressure sensor 201 at 30 kPa, and a value of the electric signal $S_{H1}(T_{H1})$ output from the heating element 61, which produces heat at 100°C, in the electric signal storage device 401.

(e) If the pressure in the chamber 101 is changed, Step S102 is finished, and Step S103 is performed. In Step S103, the driver circuit 303 determines whether the temperature of the heating element 61 of Fig. 1 and Fig. 2 is changed. If the temperature of the heating element 61 is not changed to 150°C and 200°C, Step S101 is performed again. The driver circuit 303 of Fig. 15 causes the heating element 61 of Fig. 1 and Fig. 2 to produce heat at 150°C. After that, the loop of Step S101 and Step S102 is repeated. The measuring section 301 of Fig. 15 stores values of the electric signal $S_P$ output from the pressure sensor 201 at the atmospheric pressure, 5 kPa, 20 kPa, and 30 kPa, respectively, and a value of the electric signal $S_{H2}(T_{H2})$ output from the heating element 61, which produces heat at 150°C, in the electric signal storage device 401.

(f) In Step S103, the driver circuit 303 determines whether the temperature of the heating element 61 of Fig. 1 and Fig. 2 is changed, again. If the temperature of the heating element 61 is not changed to 200°C, Step S101 is performed again. The driver circuit 303 of Fig. 15 causes the heating element 61 of Fig. 1 and Fig. 2 to produce heat at 200°C. After that, the loop of Step S101 and Step S102 is repeated. The measuring section 301 of Fig. 15 stores values of the electric signal $S_P$ output from the pressure sensor 201 at the atmospheric pressure, 5 kPa, 20 kPa, and 30 kPa, respectively, and a value of the electric signal $S_{H3}(T_{H3})$ output from the heating element 61, which produces heat at 200°C, in the electric signal storage device 401.

(g) If the temperature of the heating element 61 is changed, Step S103 is finished and Step S104 is performed. In Step S104, whether the sample mixed gas is changed is determined. If the sample mixed gas is not changed to the second sample mixed gas to the fourth sample mixed gas, Step S100 is performed again. In Step S100, the first flow controller 32A of Fig. 16 is closed, the valves of the third to fourth flow controllers 32C to 32D are closed, and the valve of the second flow controller 32B is open. The second sample mixed gas is introduced in the chamber 101 of Fig. 15.

(h) Similar to the case of the first sample mixed gas, the loop of Step S101 to Step S103 is repeated. The measuring section 301 stores values of the electric signal $S_P$ output from the pressure sensor 201 exposed to the second sample mixed gas at the atmospheric pressure, 5 kPa, 20 kPa, and 30 kPa, respectively, in the electric signal storage device 401. The measuring section 301 further stores values of the electric signals $S_{H1}(T_{H1})$, $S_{H2}(T_{H2})$, $S_{H3}(T_{H3})$ output from the heating element 61, which produces heat at 100°C, 150°C, and 200°C, respectively, in the electric signal storage device 401.

(i) After that, the loop of Step S101 to Step S104 is repeated. As a result, the measuring section 301 stores values of the electric signal $S_P$ output from the pressure sensor 201 exposed to the third sample mixed gas at the atmospheric pressure, 5 kPa, 20 kPa, and 30 kPa, respectively, in the electric signal storage device 401. The measuring section 301 further stores values of the electric signals $S_{H1}(T_{H1})$, $S_{H2}(T_{H2})$, $S_{H3}(TH_3)$ output from the heating element 61, which produces heat at 100°C, 150°C, and 200°C, respectively, in the electric signal storage device 401. Further, the measuring section 301 stores values of the electric signal $S_P$ output from the pressure sensor 201 exposed to the fourth sample mixed gas at the atmospheric pressure, 5 kPa, 20 kPa, and 30 kPa, respectively, in the electric signal storage device 401. The measuring section 301 further stores values of the electric signals $S_{H1}(T_{H1})$, $S_{H2}(T_{H2})$, $S_{H3}(T_{H3})$ output from the heating element 61, which produces heat at 100°C, 150°C, and 200°C, respectively, in the electric signal storage device 401.

(j) In Step S105, the input device 312 inputs, in the density-equation creating section 302, the known value of the density D of the first sample mixed gas, the known value of the density D of the second sample mixed gas, the known value of the density D of the third sample mixed gas, and the known value of the density D of the fourth sample mixed gas. Further, the input device 312 inputs, in the calorific-value-equation creating section 352, the known calorific value Q of the first sample mixed gas, the known calorific value Q of the second sample mixed gas, the known calorific value Q of the third sample mixed gas, and the known calorific value Q of the fourth sample mixed gas. Further, each of the density-equation creating section 302 and the calorific-value-equation creating section 352 retrieves, from the electric signal storage device 401, the plurality of measured values of the electric signals $S_{H1}(T_{H1})$, $S_{H2}(T_{H2})$, $S_{H3}(T_{H3})$ output from the heating element 61, and the plurality of measured values of the electric signal $S_P$ output from the pressure sensor 201.

(k) In Step S106, the density-equation creating section 302 performs multiple regression analysis based on the values of the density D of the first sample mixed gas to the fourth sample mixed gas, based on the plurality of measured values of the electric signals $S_{H1}(T_{H1})$, $S_{H2}(T_{H2})$, $S_{H3}(T_{H3})$ output from the heating element 61, and based on the plurality of measured values of the electric signal $S_P$ output from the pressure sensor 201. As the result of multiple regression analysis, the density-equation creating section 302 calculates a density equation. In the density equation, the electric signals $S_{H1}(T_{H1})$, $S_{H2}(T_{H2})$, $S_{H3}(T_{H3})$ output from the heating element 61 are independent variables. The electric signal $S_P$ output from the pressure sensor 201 is an independent variable. The gas density D is a dependent variable. Further, the calorific-value-equation creating section 352 performs multiple regression analysis based on the calorific values Q of the first sample mixed gas to the fourth sample mixed gas, based on the plurality of measured values of the electric signals $S_{H1}(T_{H1})$, $S_{H2}(T_{H2})$, $S_{H3}(T_{H3})$ output from the heating element 61, and based on the plurality of measured values of the electric signal $S_P$ output from the pressure sensor 201. As the result of multiple regression analysis, the calorific-value-equation creating section 352 calculates a calorific-value calculating equation. In the calorific-value calculating equation, the electric signals $S_{H1}(T_{H1})$, $S_{H2}(T_{H2})$, $S_{H3}(T_{H3})$ output from the heating element 61 are independent variables. The electric signal $S_P$ output from the pressure sensor 201 is an independent variable. The calorific value Q of gas is a dependent variable. After that, in Step S107, the density-equation creating section 302 stores the created density equation in the equation storage device 402. The calorific-value-equation creating section 352 stores the created calorific-value equation in the equation storage device 402. The calorific-value equation creating method according to the embodiment is thus finished.

As described above, according to the density-equation and calorific-value-equation creating method using the density measuring system 20 of the embodiment, it is possible to create a density equation capable of uniquely calculating the value of the gas density D, and a calorific-value equation capable of uniquely calculating the calorific value Q of the gas.

Next, functions of the density measuring system 20 of Fig. 15 according to the embodiment will be described. Here, the density D and the calorific value Q of the measuring- target mixed gas, whose density D and calorific value Q are unknown, are measured. The measuring- target mixed gas such as natural gas is introduced in the chamber 101. The density D and calorific value Q of the measuring- target mixed gas are unknown. For example, the measuring- target mixed gas includes methane ($CH_4$), propane ($C_3H_8$), nitrogen ($N_2$), carbon dioxide ($CO_2$), and the like of unknown volume fractions. The pressure sensor 201 outputs the electric signal $S_P$, which depends on the pressure of the measuring-target mixed gas. The driver circuit 303 of Fig. 15 sequentially supplies the drive powers $P_{H1}$, $P_{H2}$, $P_{H3}$ to the heating element 61 of the microchip 8 of Fig. 1 and Fig. 2. In the case where the drive powers $P_{H1}$, $P_{H2}$, $P_{H3}$ are supplied to the heating element 61, the heating element 61 exposed to the measuring- target mixed gas sequentially produces heat at the temperature $T_{H1}$ (100°C), the temperature $T_{H2}$ (150°C), and the temperature $T_{H3}$ (200°C), for example. The heating element 61 outputs an electric signal $S_{H1}$ ($T_{H1}$) at the heating temperature $T_{H1}$, an electric signal $S_{H2}$ ($T_{H2}$) at the heating temperature $T_{H2}$, and an electric signal $S_{H3}$ ($T_{H3)}$ at the heating temperature $T_{H3}$.

The measuring section 301 of Fig. 15 measures the value of the electric signal $S_P$ output from the pressure sensor 201 exposed to the measuring-target mixed gas, which depends on the pressure of the measuring-target mixed gas. Further, the measuring section 301 measures values of the electric signal $S_{H1}(T_{H1})$ at the heating temperature $T_{H1}$, the electric signal $S_{H2}(T_{H2})$ at the heating temperature $T_{H2}$, and the electric signal $S_{H3}(T_{H3})$ at the heating temperature $T_{H3}$, which are output from the heating element 61 exposed to the measuring-target mixed gas. The measuring section 301 stores the measured $S_P$, $S_{H1}(T_{H1})$, $S_{H2}(T_{H2})$, and $S_{H3}(T_{H3})$ in the electric signal storage device 401.

As described above, the equation storage device 402 stores a density equation. In the density equation, the electric signal $S_{H1}(T_{H1})$ output from the heating element 61 at the heating temperature $T_{H1}$ (100°C), the electric signal $S_{H2}(T_{H2})$ output from the heating element 61 at the heating temperature $T_{H2}$ (150°C), the electric signal $S_{H3}(T_{H3})$ output from the heating element 61 at the heating temperature $T_{H3}$ (200°C), and the electric signal $S_P$ output from the pressure sensor 201 are independent variables. In the density equation, the gas density D is a dependent variable. Further, the equation storage device 402 stores a calorific-value equation. In the calorific-value equation, the electric signal $S_{H1}(T_{H1})$ output from the heating element 61 at the heating temperature $T_{H1}$ (100°C), the electric signal $S_{H2}(T_{H2})$ output from the heating element 61 at the heating temperature $T_{H2}$ (150°C), the electric signal $S_{H3}(T_{H3})$ output from the heating element 61 at the heating temperature $T_{H3}$ (200°C), and the electric signal $S_P$ output from the pressure sensor 201 are independent variables. In the calorific-value equation, the calorific value Q of gas is a dependent variable.

The density measuring system 20 of the embodiment further includes a density calculating section 305 and a calorific-value calculating section 355. The density calculating section 305 substitutes the measured values of the electric signals $S_H$ output from the heating element 61 in the independent variables of the electric signals $S_H$ output from the heating element 61, in the density equation. The density calculating section 305 further substitutes the measured values of the electric signal $S_P$ output from the pressure sensor 201 in the independent variable of the electric signals $S_P$ output from the pressure sensor 201, in the density equation. As a result, the density calculating section 305 calculates the measured value of the density D of the measuring-target mixed gas injected in the chamber 101.

The calorific-value calculating section 355 substitutes the measured value of the electric signal $S_H$ output from the heating element 61 in the independent variable of the electric signal $S_H$ output from the heating element 61, in the calorific-value equation. The calorific-value calculating section 355 further substitutes the measured value of the electric signal $S_P$ output from the pressure sensor 201 in the independent variable of the electric signal $S_P$ output from the pressure sensor 201, in the calorific-value equation. As a result, the calorific-value calculating section 355 calculates the measured value of the calorific value Q of the measuring-target mixed gas injected in the chamber 101.

A calculated-value storage device 403 is further connected to the CPU 300. The calculated-value storage device 403 stores the value of the density D of the measuring-target mixed gas calculated by the density calculating section 305, and the calorific value Q of the measuring-target mixed gas calculated by the calorific-value calculating section 355.

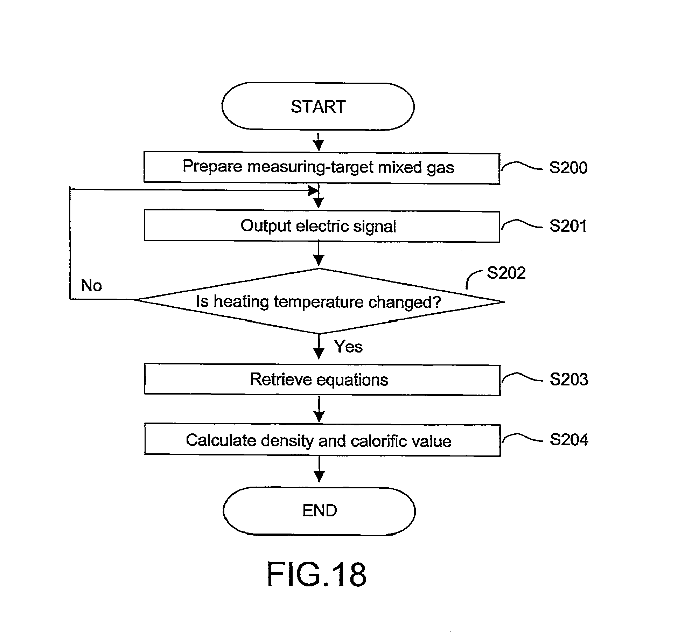

Next, with reference to a flowchart of Fig. 18, a density and calorific- value measuring method using the density measuring system 20 of the embodiment will be described.

(a) In Step S200, the measuring-target mixed gas is introduced in the chamber 101 of Fig. 15. In Step S201, the measuring section 301 measures the value of the electric signal $S_P$ output from the pressure sensor 201 exposed to the measuring-target mixed gas. The measuring section 301 stores the measured value of the electric signal $S_P$ in the electric signal storage device 401. Next, the driver circuit 303 supplies drive power $P_{H1}$ to the heating element 61 of Fig. 1 and Fig. 2. As a result, the heating element 61 produces heat at 100°C. The measuring section 301 of Fig. 15 receives an electric signal $S_{H1}(T_{H1})$ from the heating element 61 exposed to the measuring-target mixed gas, which produces heat at 100°C. The measuring section 301 stores the value of the electric signal $S_{H1}(T_{H1})$ in the electric signal storage device 401.

(b) In Step S202, the driver circuit 303 of Fig. 15 determines whether the temperature of the heating element 61 of Fig. 1 and Fig. 2 is changed. If the temperature of the heating element 61 is not changed to 150°C and 200°C, Step S201 is performed again. The driver circuit 303 supplies drive power $P_{H2}$ to the heating element 61 of Fig. 1 and Fig. 2 to thereby cause the heating element 61 of Fig. 1 and Fig. 2 to produce heat at 150°C. The measuring section 301 of Fig. 15 receives an electric signal $S_{H2}(T_{H2})$ output from the heating element 61 exposed to the measuring-target mixed gas, which produces heat at 150°C, and stores the value of electric signal $S_{H2}(T_{H2})$ in the electric signal storage device 401.

(c) In Step S202, the driver circuit 303 determines whether the temperature of the heating element 61 of Fig. 1 and Fig. 2 is changed again. If the temperature of the heating element 61 is not changed to 200°C, Step S201 is performed again. The driver circuit 303 supplies drive power $P_{H3}$ to the heating element 61 of Fig. 1 and Fig. 2 to thereby cause the heating element 61 of Fig. 1 and Fig. 2 to produce heat at 200°C. The measuring section 301 of Fig. 15 receives an electric signal $S_{H3}(T_{H3})$ output from the heating element 61 exposed to the measuring-target mixed gas, which produces heat at 200°C, and stores the value of the electric signal $S_{H3}(T_{H3})$ in the electric signal storage device 401.

(d) If the temperature of the heating element 61 is changed, Step S202 is finished and Step S203 is performed. In Step S203, the density calculating section 305 of Fig. 15 retrieves the density equation from the equation storage device 402. In the density equation, the electric signals $S_{H1}(T_{H1})$, $S_{H2}(T_{H2})$, $S_{H3}(T_{H3})$ output from the heating element 61 and the electric signal $S_P$ output from the pressure sensor 201 are independent variables. In the density equation, the gas density D is a dependent variable. Further, the calorific-value calculating section 355 retrieves the calorific-value equation from the equation storage device 402. In the calorific-value equation, the electric signals $S_{H1}(T_{H1})$, $S_{H2}(T_{H2})$, $S_{H3}(T_{H3})$ output from the heating element 61 and the electric signal $S_P$ output from the pressure sensor 201 are independent variables. In the calorific-value equation, the calorific value Q of gas is a dependent variable. Further, each of the density calculating section 305 and the calorific-value calculating section 355 retrieves, from the electric signal storage device 401, the measured values of the electric signals $S_{H1}(T_{H1})$, $S_{H2}(T_{H2})$, $S_{H3}(T_{H3})$ output from the heating element 61 exposed to the measuring-target mixed gas, and the measured value of the electric signal $S_P$ output from the pressure sensor 201.

(e) In Step S204, the density calculating section 305 substitutes the measured values in the independent variables in the density equation. In the density equation, the independent variables indicate the electric signals $S_{H1}(T_{H1})$, $S_{H2}(T_{H2})$, $S_{H3}(T_{H3})$, and the electric signal $S_P$, respectively. As a result, the density calculating section 305 calculates the value of the density D of the measuring-target mixed gas. Further, the calorific-value calculating section 355 substitutes the measured values in the independent variables in the calorific-value equation. In the calorific-value equation, the independent variables indicate the electric signals $S_{H1}(T_{H1})$, $S_{H2}(T_{H2})$, $S_{H3}(T_{H3})$, and the electric signal $S_P$, respectively. As a result, the calorific-value calculating section 355 calculates the calorific value Q of the measuring-target mixed gas. After that, the density calculating section 305 stores the calculated value of the density D in the calculated-value storage device 403. The calorific-value calculating section 355 stores the calculated calorific value Q in the calculated-value storage device 403. The density and calorific-value measuring method of the embodiment is thus finished.

As described above, according to the density and calorific-value measuring method of the embodiment, it is possible to measure the value of the density D and the calorific value Q of the measuring-target mixed gas based on the values of the electric signals $S_{H1}(T_{H1})$, $S_{H2}(T_{H2})$, $S_{H3}(T_{H3})$ output from the heating element 61 exposed to the measuring-target mixed gas, and based on the value of the electric signal $S_P$ output from the pressure sensor 201 exposed to the measuring-target mixed gas.

Component fractions of carbon hydride in natural gas are different depending on a gas field from which the natural gas is yielded. Further, natural gas includes carbon hydride, in addition, nitrogen ($N_2$), carbon dioxide ($CO_2$), and the like. So volume fractions of gas components in natural gas are different depending on a gas field from which the natural gas is yielded. In view of this, even if the kinds of gas components are known, the density D and the calorific value Q of the natural gas are unknown, in most cases. Further, the density D and the calorific value Q of natural gas yielded from the same gas field are not necessarily the same. The calorific value Q may be different depending on a yielding season.

Conventionally, a natural- gas fee is charged not based on a calorific value Q of used natural gas, but based on volume of the used natural gas. However, since the calorific value Q of natural gas is different depending on a gas field from which the natural gas is yielded, it is unfair to charge on volume of the used natural gas. To the contrary, by using the calorific- value calculating method according to the embodiment, it is possible to easily calculate the density D and the calorific value Q of mixed gas such as natural gas whose kinds of gas components are known but whose density D and calorific value Q are unknown because volume fractions of the gas components are unknown. As a result, it is possible to charge fair gas fees.

Further, from an environmental viewpoint, it is not preferable to exhaust gas, whose density D and calorific value Q are measured, to the atmosphere. In view of this, in a case where the density D and the calorific value Q of the gas in the gas pipe are measured, it is preferable to provide a density measuring system on the gas pipe itself or on a bypass path of the gas pipe, and to return the gas, whose density D and calorific value Q are measured, to the gas pipe. At this time, the pressure in the gas pipe may fluctuate greatly. To the contrary, according to the density measuring system of the embodiment, each of the density equation and the calorific- value equation includes an independent variable indicating pressure. As a result, it is possible to reduce calculation errors of the density D and the calorific value, which relates to pressure fluctuation. Note that the same pressure sensor 201 may be used to create the density equation or the calorific- value equation and to measure the density or the calorific value. In this case, the pressure sensor 201 may not include a correction circuit. The reason is as follows. That is, even if an exact pressure value is not measured, only if an electric signal output from the pressure sensor 201 depending on pressure is measured, it is possible to reduce a calculation error of a calorific value due to pressure fluctuation.

(Example 1)

First, 40 kinds of sample mixed gas were prepared. The calorific values Q of the prepared 40 kinds of sample mixed gas were known. Each of the 40 kinds of sample mixed gas included, as gas components, at least one of or all of methane ($CH_4$), ethane ($C_2H_6$), propane ($C_3H_8$), butane ($C_4H_{10}$), nitrogen ($N_2$), and carbon dioxide ($CO_2$) . For example, particular sample mixed gas included 90 vol% of methane, 3 vol% of ethane, 1 vol% of propane, 1 vol% of butane, 4 vol% of nitrogen, and 1 vol% of carbon dioxide. Further, particular sample mixed gas included 85 vol% of methane, 10 vol% of ethane, 3 vol% of propane, 2 vol% of butane, no nitrogen, and no carbon dioxide. Further, particular sample mixed gas included 85 vol% of methane, 8 vol% of ethane, 2 vol% of propane, 1 vol% of butane, 2 vol% of nitrogen, and 2 vol% of carbon dioxide.

Next, the 40 kinds of sample mixed gas were used, and a plurality of measured values of the electric signals $S_{H1}$ ($T_{H1}$), $S_{H2}$ ($T_{H2}$), $S_{H3}$ ($T_{H3}$) output from the heating element were obtained. After that, a linear equation, a quadratic equation, and a cubic equation for calculating the calorific value Q were created by means of support vector regression based on the known calorific value Q of each of the 40 kinds of sample mixed gas, and based on the plurality of measured values of the electric signals $S_{H1}$ ($T_{H1}$), $S_{H2}$ ($T_{H2}$), $S_{H3}$ ($T_{H3}$) output from the heating element. The electric signals $S_{H1}$ ($T_{H1}$), $S_{H2}$ ($T_{H2}$), $S_{H3}$ ($T_{H3}$) output from the heating element were independent variables. The calorific value Q was a dependent variable.

In creating the linear equation for calculating the calorific value Q, the number of calibration points may be arbitrarily determined (e.g., 3 to 5). In creating the quadratic equation for calculating the calorific value Q, the number of calibration points may be arbitrarily determined (e.g., 8 to 9). In creating the cubic equation for calculating the calorific value Q, the number of calibration points may be arbitrarily determined (e.g., 10 to 14).

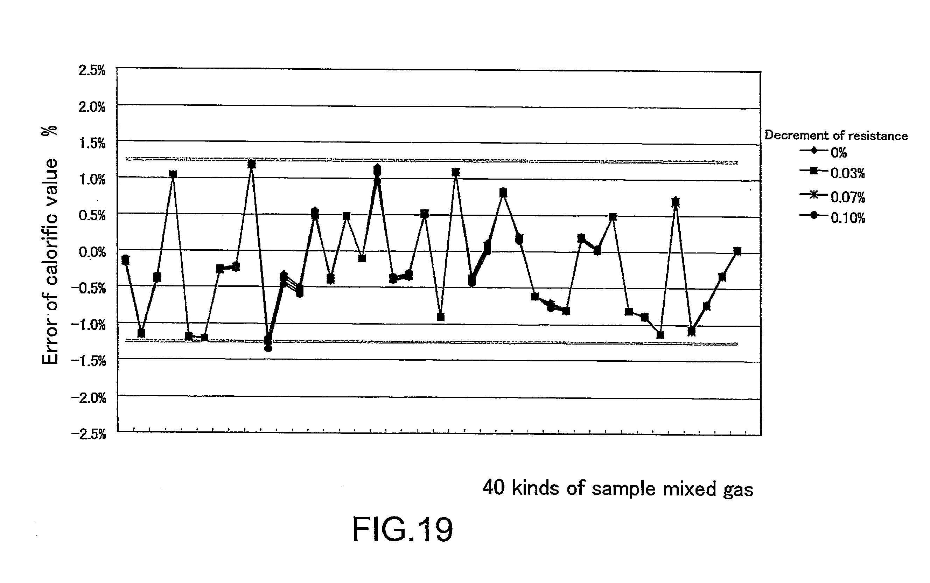

The calorific value Q of each of the 40 kinds of sample mixed gas was calculated by using the created calorific-value equations. The calculated calorific value Q was compared with the true calorific value Q. As shown in Fig. 19, an error was plus/minus 1.3% or less. Further, resistance of the heating element was decreased by 0.03%, 0.07%, and 0.10% on purpose. However, the error was not increased. It indicated that drift of the heating element due to aging degradation or the like did not affect calculation of a calorific value.

(Comparative Example 1)

As shown in Equation (9), the heat-radiation coefficient $M_I$ of mixed gas depends on the resistance value $R_H$ of the heating element and the resistance value $R_I$ of the temperature detector. In view of this, the calorific value Q of mixed gas per unit volume is obtained based on the following Equation (47). Equation (47) is obtained by deforming Equation (23). In Equation (47), the resistance values $R_{H1}(T_{H1})$, $R_{H2}(T_{H2})$, $R_{H3}(T_{H3})$ of the heating element in the case where the temperatures of the heating element are $T_{H1}$, $T_{H2}$, and $T_{H3}$, respectively, are variables. The resistance value $R_I$ of the temperature detector exposed to the mixed gas is a variable. g is indicative of a function.

$$Q=g[R_{H1}(T_{H1}), \ R_{H2}(T_{H2}), \ R_{H3}(T_{H3}), \ R_I] \ ...(47)$$

Further, the calorific value Q of mixed gas per unit volume is obtained based on the following Equation (48) . In Equation (48), the currents $I_{H1}$ ($T_{H1}$), $I_{H2}$ ($T_{H2}$), $I_{H3}$ ($T_{H3}$) passing through the heating element in the case where the temperatures of the heating element are $T_{H1}$, $T_{H2}$, and $T_{H3}$, respectively, are variables. The current $I_I$ of the temperature detector exposed to the mixed gas is a variable. g is indicative of a function.

$$Q=g[I_{H1}(T_{H1}), \ I_{H2}(T_{H2}), \ I_{H3}(T_{H3}), \ I_I] \ ...(48)$$

Alternatively, the calorific value Q of mixed gas per unit volume is obtained based on the following Equation (49) . In Equation (49), the voltages $V_{H1}$ ($T_{H1}$), $V_{H2}$ ($T_{H2}$), $V_{H3}$ ($T_{H3}$) applied to the heating element in the case where the temperatures of the heating element are $T_{H1}$, $T_{H2}$, and $T_{H3}$, respectively, are variables. The voltage $V_I$ applied to the temperature detector exposed to the mixed gas is a variable. g is indicative of a function.

$$Q=g[V_{H1}(T_{H1}), \ V_{H2}(T_{H2}), \ V_{H3}(T_{H3}), \ V_I] \ ...(49)$$

Alternatively, the calorific value Q of mixed gas per unit volume is obtained based on the following Equation (50). In Equation (50), the output signals $AD_{H1}$ ($T_{H1}$), $AD_{H2}$ ($T_{H2}$), $AD_{H3}$ ($T_{H3}$) output from an analog-digital converter circuit (hereinafter referred to as "A/D converter circuit") connected to the heating element in the case where the temperatures of the heating element are $T_{H1}$, $T_{H2}$, and $T_{H3}$, respectively, are variables. The output signal $AD_I$ of an A/D converter circuit connected to the temperature detector exposed to the mixed gas is a variable. g is indicative of a function.

$$Q=g[AD_{H1}(T_{H1}), \ AD_{H2}(T_{H2}), \ AD_{H3}(T_{H3}), \ AD_I] \ ...(50)$$

In view of this, the calorific value Q of mixed gas per unit volume is obtained based on the following Equation (51). In Equation (51), the electric signals $S_{H1}(T_{H1})$, $S_{H2}(T_{H2})$, $S_{H3}(T_{H3})$ output from the heating element in the case where the heating temperatures of the heating element are $T_{H1}$, $T_{H2}$, and $T_{H3}$, respectively, are variables. The electric signal $S_I$ output from the temperature detector exposed to the mixed gas is a variable. g is indicative of a function.

$$Q=g[S_{H1}(T_{H1}), \ S_{H2}(T_{H2}), \ S_{H3}(T_{H3}), \ S_I] \ ...(51)$$

Here, the 40 kinds of sample mixed gas were used, which were the same as the 40 kinds of sample mixed gas of Example 1. A plurality of measured values of the electric signal $S_I$ output from the temperature detector, and a plurality of measured values of the electric signals $S_{H1}$ ($T_{H1}$), $S_{H2}$ ($T_{H2}$), $S_{H3}$ ($T_{H3}$) output from the heating element were obtained. After that, a linear equation, a quadratic equation, and a cubic equation for calculating the calorific value Q were created by means of support vector regression based on the known calorific value Q of each of the 40 kinds of sample mixed gas, based on the plurality of measured values of the electric signal $S_I$ output from the temperature detector, and based on the plurality of measured values of the electric signals $S_{H1}$ ($T_{H1}$), $S_{H2}$ ($T_{H2}$), $S_{H3}$ ($T_{H3}$) output from the heating element. The electric signal $S_I$ output from the temperature detector and the electric signals $S_{H1}$ ($T_{H1}$), $S_{H2}$ ($T_{H2}$), $S_{H3}$ ($T_{H3}$) output from the heating element were independent variables. The calorific value Q was a dependent variable.

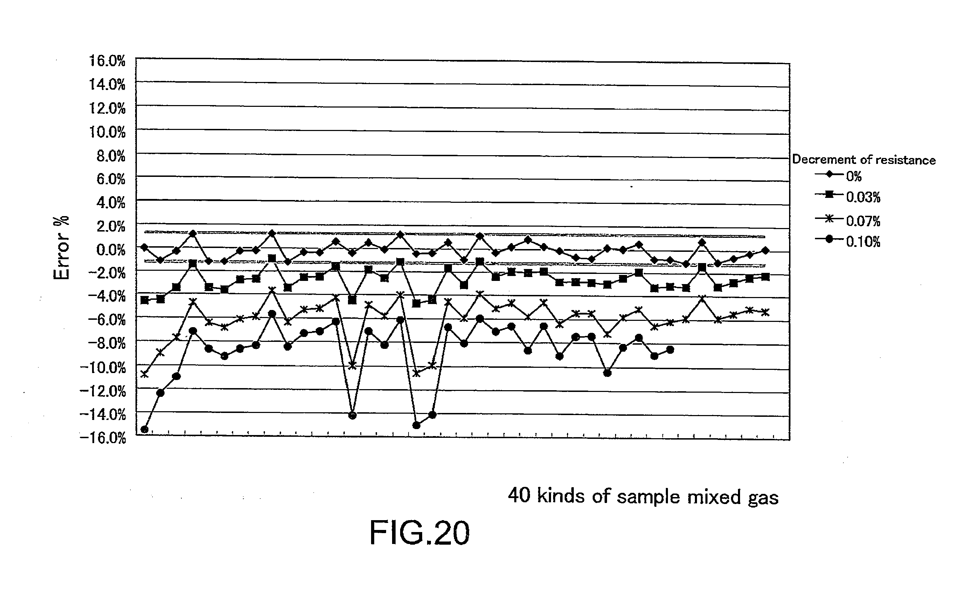

The calorific value Q of each of the 40 kinds of sample mixed gas was calculated by using the created calorific-value equations. The calculated calorific value Q was compared with the true calorific value Q. As shown in Fig. 20, an error was plus/minus 1.3% or less. Meanwhile, resistance of the temperature detector was not changed and, at the same time, resistance of the heating element was decreased by 0.03%, 0.07%, and 0.10% on purpose. Then, the error was increased. It indicated that drift of the heating element due to aging degradation or the like affects calculation of a calorific value.

As described above, current is supplied to the temperature detector such that the temperature detector does not produce heat by itself. Because of this, aging degradation of the temperature detector is less than aging degradation of the heating element. In the case of calculating a calorific value based on the calorific-value equation including the electric signal $S_I$ output from the temperature detector, it is possible to accurately calculate the calorific value before the heating element is aged and degraded. However, after the heating element is aged and degraded, an error of a calculated calorific value is generated. The error of a calculated calorific value is due to difference between aging degradation of the heating element and aging degradation of the temperature detector.

(Example 2)

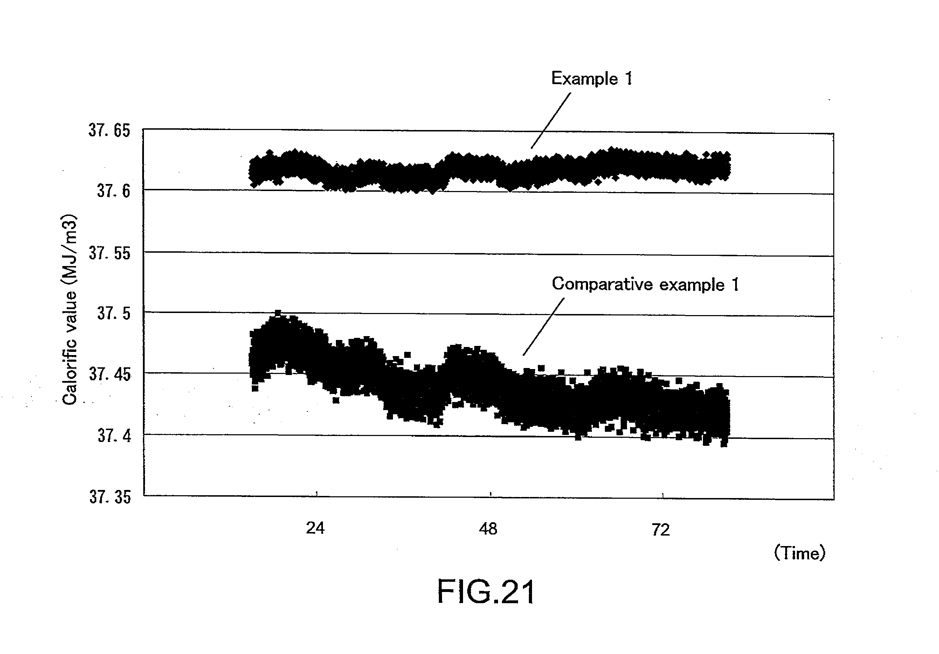

The calorific value of methane gas was temporally calculated based on the calorific-value equation created in Example 1. The calorific-value equation created in Example 1 did not include the electric signal $S_I$ output from the temperature detector as an independent variable. As a result, as shown in Fig. 21, in the case of using the calorific-value equation created in Example 1, the calculated calorific value of methane gas was approximately constant.

(Comparative Example 2)

The calorific value of methane gas was temporally calculated based on the calorific-value equation created in Comparative Example 1. The calorific-value equation created in the comparative example 1 included the electric signal $S_I$ output from the temperature detector as an independent variable. As a result, as shown in Fig. 21, in the case of using the calorific-value equation created in the Comparative Example 1, the calculated calorific value of methane gas was decreased as time passed.

(Example 3)

First, 12 kinds of sample mixed gas were prepared. The calorific values Q of the prepared 12 kinds of sample mixed gas were known. Each of the 12 kinds of sample mixed gas included, as gas components, at least one of or all of methane ($CH_4$), ethane ($C_2H_6$), propane ($C_3H_8$), butane ($C_4H_{10}$), nitrogen ($N_2$), and carbon dioxide ($CO_2$). For example, particular sample mixed gas included 90 vol% of methane, 3 vol% of ethane, 1 vol% of propane, 1 vol% of butane, 4 vol% of nitrogen, and 1 vol% of carbon dioxide. Further, particular sample mixed gas included 85 vol% of methane, 10 vol% of ethane, 3 vol% of propane, 2 vol% of butane, no nitrogen, and no carbon dioxide. Further, particular sample mixed gas included 85 vol% of methane, 8 vol% of ethane, 2 vol% of propane, 1 vol% of butane, 2 vol% of nitrogen, and 2 vol% of carbon dioxide.

Next, the 12 kinds of sample mixed gas were used, and a plurality of measured values of the electric signal $S_P$ output from the pressure sensor were obtained. Further, a plurality of measured values of the electric signals $S_{H1}$ ($T_{H1}$), $S_{H2}$ ($T_{H2}$), $S_{H3}$ ($T_{H3}$), $S_{H4}$ ($T_{H4}$) output from the heating element were obtained. Here, four kinds of different voltages were applied to the heating element. After that, an equation for calculating the calorific value Q was created by means of support vector regression based on the known calorific value Q of each of the 12 kinds of sample mixed gas, based on the plurality of measured values of the electric signal $S_P$ output from the pressure sensor, and based on the plurality of measured values of the electric signals $S_{H1}$ ($T_{H1}$), $S_{H2}$ ($T_{H2}$), $S_{H3}$ ($T_{H3}$), $S_{H4}$ ($T_{H4}$) output from the heating element 61. The electric signal $S_P$ output from the pressure sensor was an independent variable. The electric signals $S_{H1}$ ($T_{H1}$), $S_{H2}$ ($T_{H2}$), $S_{H3}$ ($T_{H3}$), $S_{H4}$ ($T_{H4}$) output from the heating element were independent variables. The calorific value Q was a dependent variable.

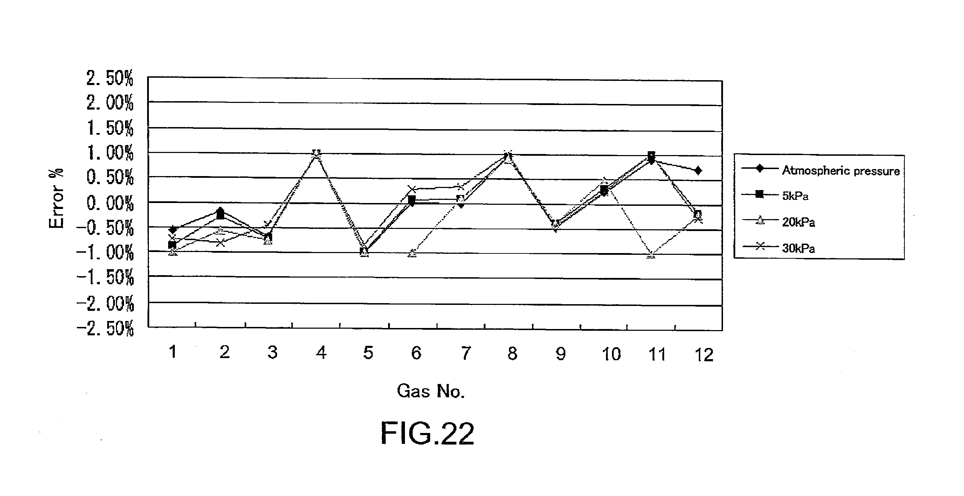

The calorific value Q of each of the 12 kinds of sample mixed gas was calculated by using the created equation. The calculated calorific value Q was compared with the true calorific value Q. As shown in Fig. 22, an error was plus/minus 1% or less.

(Comparative Example 3)

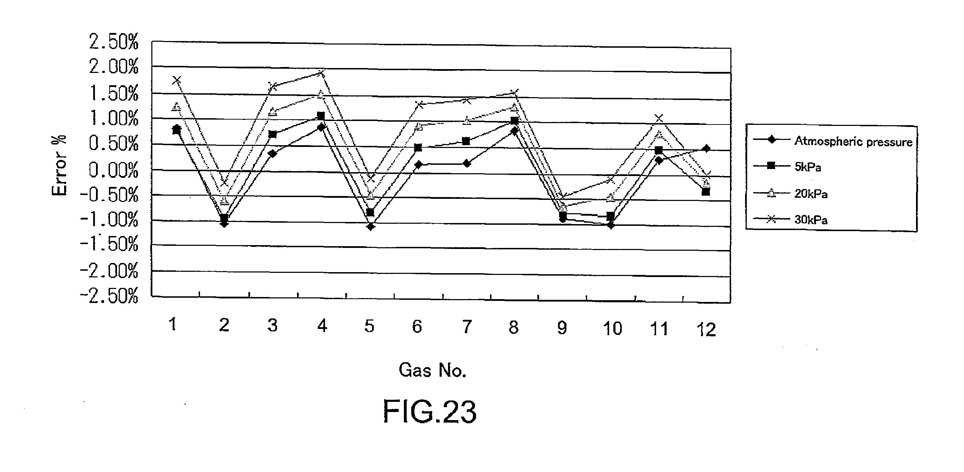

The 12 kinds of sample mixed gas were used, which were the same as the 12 kinds of sample mixed gas of Example 3, and an equation for calculating the calorific value Q was created. The created equation did not include the electric signal $S_P$ output from the pressure sensor as an independent variable. The electric signals $S_{H1}$($T_{H1}$), $S_{H2}$($T_{H2}$), $S_{H3}$($T_{H3}$), $S_{H4}$($T_{H4}$) output from the heating element were independent variables. The calorific value Q was a dependent variable. The calorific value Q of each of the 12 kinds of sample mixed gas was calculated by using the created equation, which did not include the electric signal $S_P$ output from the pressure sensor as an independent variable. The calculated calorific value Q was compared with the true calorific value Q. As shown in Fig. 23, an error was plus/minus 2% or less.

(Example 4)

First, 12 kinds of sample mixed gas were prepared. The values of the density D of the prepared 12 kinds of sample mixed gas were known. Each of the 12 kinds of sample mixed gas included, as gas components, at least one of or all of methane ($CH_4$), ethane ($C_2H_6$), propane ($C_3H_8$), butane ($C_4H_{10}$), nitrogen ($N_2$), and carbon dioxide ($CO_2$). For example, particular sample mixed gas included 90 vol% of methane, 3 vol% of ethane, 1 vol% of propane, 1 vol% of butane, 4 vol% of nitrogen, and 1 vol% of carbon dioxide. Further, particular sample mixed gas included 85 vol% of methane, 10 vol% of ethane, 3 vol% of propane, 2 vol% of butane, no nitrogen, and no carbon dioxide. Further, particular sample mixed gas included 85 vol% of methane, 8 vol% of ethane, 2 vol% of propane, 1 vol% of butane, 2 vol% of nitrogen, and 2 vol% of carbon dioxide.

Next, the 12 kinds of sample mixed gas were used, and a plurality of measured values of the electric signal $S_P$ output from the pressure sensor were obtained. Further, a plurality of measured values of the electric signals $S_{H1}$ ($T_{H1}$), $S_{H2}$ ($T_{H2}$), $S_{H3}$ ($T_{H3}$), $S_{H4}$ ($T_{H4}$) output from the heating element were obtained. Four kinds of different voltages were applied to the heating element. After that, an equation for calculating the density D was created by means of support vector regression based on the known value of the density D of each of the 12 kinds of sample mixed gas, based on the plurality of measured values of the electric signal $S_P$ output from the pressure sensor, and based on the plurality of measured values of the electric signals $S_{H1}$ ($T_{H1}$), $S_{H2}$ ($T_{H2}$), $S_{H3}$ ($T_{H3}$), $S_{H4}$ ($T_{H4}$) output from the heating element 61. The electric signal $S_P$ output from the pressure sensor was an independent variable. The electric signals $S_{H1}$ ($T_{H1}$), $S_{H2}$ ($T_{H2}$), $S_{H3}$ ($T_{H3}$), $S_{H4}$ ($T_{H4}$) output from the heating element were independent variables. The density D was a dependent variable.

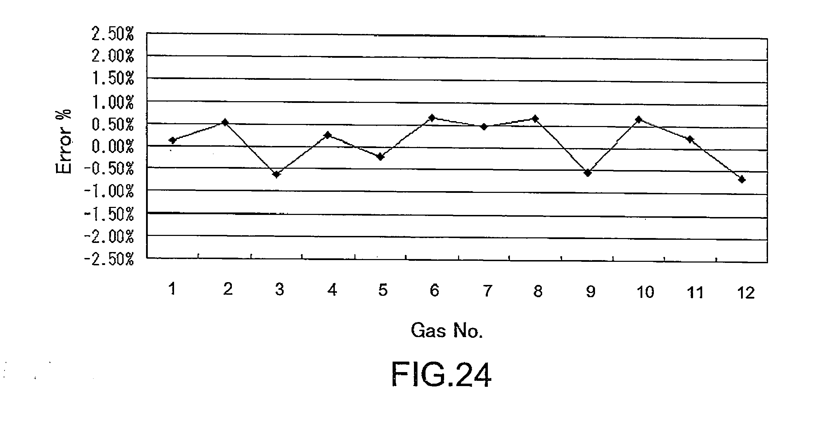

The density D of each of the 12 kinds of sample mixed gas was calculated by using the created equation for calculating the density D. The calculated density D was compared with the true density D. As shown in Fig. 24, an error was plus/minus 0.65% or less.

(Other embodiments)

The embodiments of the present invention are described above. It should be understood that descriptions and drawings, which are part of the disclosure, do not limit the present invention. It should be understood by those skilled in the art that various modifications, embodiments, and operational technologies may occur based on the disclosure. It should be understood that the present invention comprises various embodiments and the like which are not described here.

**Claims**

1. A density-equation creating system, comprising:

   a container (101) into which each of a plurality of kinds of mixed gas can be injected;
   a heating element (61) configured to produce heat at a plurality of heating temperatures ($T_H$), the heating element (61) being arranged in the container (101);
   a measuring section (301) configured to measure values of electric signals ($S_H$) output from the heating element, the heating element (61) producing heat at the plurality of heating temperatures ($T_H$), respectively; and
   an equation creating section (302) configured to create a density equation (46) including independent variables and a dependent variable based on known values of density of the plurality of kinds of mixed gas and based on measured values of electric signals ($S_{H1}$ ($T_{H1}$), $S_{H2}$ ($T_{H2}$), ..., $S_{Hn-1}$ ($T_{Hn-1}$) ) output from the heating element (61) at the plurality of heating temperatures ($T_H$), the independent variables comprising electric signals ($S_H$) output from the heating element (61) at the plurality of heating temperatures ($T_H$), respectively, the dependent variable being the density (D) .

2. The density-equation creating system according to claim 1, wherein
   the number of the plurality of heating temperatures ($T_H$) of the heating element is at least a value obtained by subtracting 1 from the number of gas components in each of the plurality of kinds of mixed gas.

3. The density-equation creating system according to claim 1 or claim 2, wherein
   the independent variables of the density equation (46) comprise an electric signal ($S_P$) output from a pressure sensor (201), and
   the measuring section (301) is configured to measure a value of the electric signal ($S_P$) output from the pressure sensor (201).

4. The density-equation creating system according to any one of claims 1 to 3, wherein
   the equation creating section (302) is configured to create the density equation by means of support vector regression.

5. A density-equation creating method, comprising:

   preparing a plurality of kinds of mixed gas;
   causing a heating element (61) to produce heat at a plurality of heating temperatures ($T_{H1}$, $T_{H2}$, ..., $T_{Hn-1}$), the heating element being exposed to each of the plurality of kinds of mixed gas;
   measuring values of electric signals ($S_{H1}$ ($T_{H1}$), $S_{H2}$ ($T_{H2}$), ..., $S_{Hn-1}$ ($T_{Hn-1}$) ) output from the heating element (61) at the plurality of heating temperatures ($T_{H1}$, $T_{H2}$, ..., $T_{Hn-1}$), respectively; and
   creating a density equation (46) including independent variables and a dependent variable based on known values of density of the plurality of kinds of mixed gas and based on the measured values of electric signals ($S_{H1}$ ($T_{H1}$), $S_{H2}$ ($T_{H2}$), ..., $S_{Hn-1}$ ($T_{Hn-1}$) ) output from the heating element (61) at the plurality of heating temperatures ($T_{H1}$, $T_{H2}$, ..., Thin- 1) the independent variables comprising electric signals ($S_H$) output from the heating element (61) at the plurality of heating temperatures ($T_H$), respectively, the dependent variable being the density (D) .

6. The density-equation creating method according to claim 5, wherein
   the number of the plurality of heating temperatures ($T_{H1}$, $T_{H2}$, ..., $T_{Hn-1}$) is at least a value obtained by subtracting 1 from the number of gas components in each of the plurality of kinds of mixed gas.

7. The density-equation creating method according to claim 5 or claim 6, wherein
   the independent variables of the density equation (46) comprises an electric signal ($S_P$) output from a pressure sensor (201), and
   wherein the method further comprises the step of measuring a value of the electric signal ($S_P$) output from the pressure sensor (201).

8. The density-equation creating method according to any one of claims 5 to 7, wherein support vector regression is used in the step of creating a density equation.

9. A density measuring system (20), comprising:

a container (101) into which a measuring-target mixed gas can be injected, the container including a heating element (61), the heating element (61) being configured to produce heat at a plurality of heating temperatures $(T_{H1}, T_{H2}, T_{H3})$;

a storage device (402) configured to store a density equation (46) including independent variables and a dependent variable, the independent variables comprising electric signals $(S_H)$ output from the heating element (61) at the plurality of heating temperatures $(T_{H1}, T_{H2}, T_{H3})$, respectively, the dependent variable being density (D);

a measuring section (301) configured to measure values of electric signals $(S_{H1}(T_{H1}), S_{H2}(T_{H2}), S_{H3}(T_{H3}))$ output from the heating element (61), the heating element (61) producing heat at the plurality of heating temperatures $(T_H)$, respectively, the heating element (61) being exposed to the measuring-target mixed gas; and

a density calculating section (305) configured to substitute the measured values of the electric signals $(S_{H1}(T_{H1}), S_{H2}(T_{H2}), S_{H3}(T_{H3}))$ output from the heating element (61) in the independent variables $(S_H)$ of the density equation (46), respectively, to calculate a measured value of the density (D) of the measuring- target mixed gas.

10. The density measuring system according to claim 9, wherein the number of the plurality of heating temperatures $(T_H)$ is at least a value obtained by subtracting 1 from the number of a plurality of kinds of gas components in the measuring-target mixed gas.

11. The density measuring system according to claim 9 or claim 10, wherein the independent variables of the density equation (46) comprise an electric signal $(S_P)$ output from a pressure sensor (201),

the measuring section (301) is configured to measure a value of the electric signal $(S_P)$ output from the pressure sensor (201), and

the density calculating section (305) is configured to substitute the measured value of the electric signal $(S_P)$ output from the pressure sensor (201) in the independent variables of the density equation (46) to calculate the measured value of the density (D) of the measuring-target mixed gas.

12. The density measuring system according to any one of claims 9 to 11, comprising a density-equation creating system according to any of claims 1 to 4 for creating the density equation (46) to be stored in the storage device (402).

13. A density measuring method, comprising:

preparing measuring-target mixed gas;

causing a heating element (61) to produce heat at a plurality of heating temperatures $(T_{H1}, T_{H2}, T_{H3})$, the heating element (61) being exposed to the measuring-target mixed gas;

measuring values of electric signals $(S_{H1}(T_{H1}), S_{H2}(T_{H2}), S_{H3}(T_{H3}))$ output from the heating element (61) at the plurality of heating temperatures $(T_{H1}, T_{H2}, T_{H3})$, respectively;

providing a density equation (46) including independent variables and a dependent variable, the independent variables comprising electric signals $(S_H)$ output from the heating element (61) at the plurality of heating temperatures $(T_H)$, respectively, the dependent variable being density (D); and

substituting the measured values of the electric signals $(S_{H1}(T_{H1}), S_{H2}(T_{H2}), S_{H3}(T_{H3}))$ output from the heating element (61) in the independent variables of the density equation (46), respectively, to calculate a density (D) of the measuring-target mixed gas.

14. The density measuring method according to claim 13, wherein the number of the plurality of heating temperatures $(T_{H1}, T_{H2}, T_{H3})$ is at least a value obtained by subtracting 1 from the number of a plurality of kinds of gas components in the measuring-target mixed gas.

15. The density measuring method according to claim 13 or claim 14, wherein the independent variables of the density equation (46) comprise an electric signal $(S_P)$ output from a pressure sensor (201), and

wherein the method further comprises the steps of measuring a value of the electric signal $(S_P)$ output from the pressure sensor (201) and
substituting the measured value of the electric signal ($S_P$) output from the pressure sensor (201) in the independent variables of the density equation (46) to calculate the density (D) of the measuring-target mixed gas.

16. The density measuring method according to any one of claims 13 to 15, wherein
the density equation is created according to the method of any of claims 5 to 8.

FIG.1

8 : Microchip

FIG.2

EP 2 645 081 A2

8:Microchip

FIG.3

FIG.4

EP 2 645 081 A2

FIG.5

FIG.6

FIG.7

EP 2 645 081 A2

FIG.8

FIG.9

EP 2 645 081 A2

FIG.10

First voltage

Thermal conductivity mW/(m·K)

1/RH Ω⁻¹

FIG.11

EP 2 645 081 A2

FIG.12

FIG.13

FIG.14

FIG.15

FIG.16

START

Prepare sample mixed gas — S100

Output electric signal — S101

Is pressure changed? — S102
No → (loop back)
Yes ↓

Is heating temperature changed? — S103
No → (loop back)
Yes ↓

Is sample mixed gas changed? — S104
No → (loop back)
Yes ↓

Collect data — S105

Multiple regression analysis — S106

Register — S107

END

FIG.17

START

Prepare measuring-target mixed gas — S200

Output electric signal — S201

Is heating temperature changed? — S202
No
Yes

Retrieve equations — S203

Calculate density and calorific value — S204

END

FIG.18

FIG.19

EP 2 645 081 A2

40 kinds of sample mixed gas

FIG.20

FIG.21

FIG.22

EP 2 645 081 A2

FIG.23

EP 2 645 081 A2

FIG.24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H10281967 B

• JP H05141999 B

**Non-patent literature cited in the description**

• **A. J SMOLA ; B. SCHOLKOPF.** A Tutorial on Support Vector Regression. *NeuroCOLT Technical Report (NC-TR-98-030,* 1998